# EUROPÄISCHE PATENTSCHRIFT

(11) **EP 3 837 750 B1**
(45) Veröffentlichungstag und Bekanntmachung des Hinweises auf die Patenterteilung: **21.05.2025**
(21) Anmeldenummer: 19786475.4
(22) Anmeldetag: 27.09.2019
(51) Int. Cl.: H02J 1/08, H02J 1/12, H02J 1/00

(54) **ENERGIEVERSORGUNGSSYSTEM FÜR EINE WASSERGEBUNDENE EINRICHTUNG MIT ERSTEM UND ZWEITEM WICKLUNGSSYSTEM EINES GENERATORSSYSTEMS ZUR SPEISUNG UNTERSCHIEDLICHER GLEICHSPANNUNGSBUSSE**
ENERGY SUPPLY SYSTEM FOR A WATER-BOUND DEVICE HAVING A FIRST AND SECOND WINDING SYSTEM OF A GENERATOR SYSTEM FOR SUPPLYING DIFFERENT DC VOLTAGE BUSES
SYSTÈME D'ALIMENTATION ÉLECTRIQUE CONÇU POUR UN DISPOSITIF HYDRAULIQUE COMPORTANT UN PREMIER ET UN DEUXIÈME SYSTÈME D'ENROULEMENT D'UN SYSTÈME DE GÉNÉRATEUR POUR ALIMENTER DIFFÉRENTS BUS À TENSION CONTINUE

(30) Priorität: 28.09.2018 DE 102018216785
(43) Veröffentlichungstag der Anmeldung: 23.06.2021
(73) Patentinhaber: Siemens Energy Global GmbH & Co. KG, 81739 München (DE); Siemens Energy AS, 0596 Oslo (NO)
(72) Erfinder: SCHULZ, Veiko, 21244 Buchholz I.D.N (DE); VOSS, Wolfgang, 91097 Oberreichenbach (DE)
(86) Internationale Anmeldenummer: PCT/EP2019/076161
(87) Internationale Veröffentlichungsnummer: WO 2020/065000

(56) Entgegenhaltungen:
- WO-A1-2010/022389
- WO-A2-2005/049418

## Beschreibung

Die Erfindung betrifft ein Energieversorgungssystem für eine wassergebundene Einrichtung, insbesondere eine schwimmende Einrichtung. Schwimmende Einrichtungen sind beispielsweise Schiffe, U-Boote, Ölplattformen und/oder Gasplattformen. Beispiele für Schiffe sind Kreuzfahrtschiffe, Fregatten, Containerschiffe, Flugzeugträger, Eisbrecher etc. Schwimmende Einrichtungen sind wassergebundene Einrichtungen. Ölplattformen oder Gasplattformen, welche auf dem Meeresgrund stehen, sind Beispiele für wassergebundene Einrichtungen. Neben dem Energieversorgungssystem betrifft die Erfindung auch ein entsprechendes Verfahren zum Betrieb dieses Energieversorgungssystems.

Ein Energieversorgungssystem für eine wassergebundene Einrichtung bzw. eine schwimmende Einrichtung weist Energiequellen auf. Wird nachfolgend von einer schwimmenden Einrichtung gesprochen, so ist damit auch entsprechend eine wassergebundene Einrichtung gemeint und umgekehrt. Beispiele für Energiequellen sind ein Dieselgenerator, eine Brennstoffzelle, eine Batterie/Akkumulator, ein Schwungrad, etc. Der Diesel des Dieselgenerators ist beispielsweise mit Schwerölschiffsdiesel und/oder LNG betreibbar. Das Energieversorgungssystem ist beispielsweise dafür vorgesehen, einen Antrieb der schwimmenden Einrichtung mit elektrischer Energie zu versorgen oder auch Hilfsbetriebe bzw. weitere Verbraucher, wie Klimaanlage, Beleuchtung, Automatisierungssysteme, etc. Das Energieversorgungssystem ist insbesondere derart ausgestaltbar, dass auch bei Ausfall einer Energiequelle zumindest ein Notbetrieb für die schwimmende Einrichtung ermöglicht werden kann. Die Energieversorgung einer schwimmenden Einrichtung weist insbesondere ein Bordnetz auf. Das Bordnetz (das elektrische Bordnetz) dient der elektrischen Energieversorgung der schwimmenden Einrichtung.

Ist eine schwimmende Einrichtung beispielsweise dazu befähigt, ihre Position zu halten, so weist diese eine Vielzahl von Antrieben auf. Diese Antriebe weisen insbesondere einen Propeller oder einen Wasserstrahler (Waterjet) auf. Diese Antriebe zum Halten der Position des Schiffes im Wasser und/oder für den Vortrieb des Schiffes im Wasser sind insbesondere unabhängig voneinander betriebsbereit zu halten. Weist diese schwimmende Einrichtung beispielsweise zwei oder mehr Antriebssysteme im Heckbereich auf, wie z.B. zwei POD-Antriebe oder zwei Propeller mit aus dem Schiffsrumpf ragenden Wellen, welche von einem elektrischen Motor und/oder von einem Dieselmotor mit einem Wellengenerator angetrieben sind, so ist es vorteilhaft, wenn diese im Falle eines Fehlers bei einem Antrieb unabhängig voneinander mit elektrischer Energie versorgt werden können.

Aus der EP 3 046 206 A1 ist eine Energieverteilung auf einem Schiff bekannt. Diese weist einen ersten Mittelspannungsbus und einen zweiten Mittelspannungsbus auf. Der zweite Mittelspannungsbus weist keine direkte Verbindung mit dem ersten Mittelspannungsbus auf. Weiterhin weist die Energieverteilung einen ersten AC-Bus mit niedriger Spannung, einen ersten Stromrichter zwischen dem ersten Mittelspannungsbus und dem ersten AC-Bus auf, um einen Leistungsflusses vom ersten Mittelspannungsbus zum ersten AC-Bus zu ermöglichen. Weiterhin weist die Energieverteilung auch einen zweiten AC-Bus und einen zweiten Stromrichter zwischen dem zweiten Mittelspannungsbus und dem zweiten AC-Bus auf, um einen Leistungsflusses vom zweiten Mittelspannungsbus zum zweiten AC-Bus zu ermöglichen.

Aus der WO 2016/116595 A1 ist eine Einrichtung zur Verteilung gespeicherter elektrischer Energie auf einem Schiff bekannt, welche auch einen oder mehrere Wechselstromverbraucher umfasst. Im Falle eines Ausfalls einer primären elektrischen Energieversorgung ist ein DC-Netz mit einer Vielzahl von elektrischen Energiespeicherelementen vorgesehen, um die Versorgung eines oder mehrerer AC-Verbraucher mit gespeicherter elektrischer Energie zu ermöglichen. Im Gleichstromkreis sind mehrere Unterbrechersysteme zum Abschalten einer oder mehrerer elektrischer Hilfsenergie vorgesehen.

Aus der DE 102009043530 A1 ist ein Energieversorgungssystem mit einer elektrischen Antriebswelle bekannt. Die elektrische Antriebswelle weist zumindest einen drehzahlveränderbaren Generator zur Erzeugung einer Spannung mit variabler Amplitude und variabler Frequenz auf und zumindest einem mit dieser Spannung versorgten drehzahl-veränderbaren Antriebsmotor. Der Generator weist beispielsweise eine Supraleiter-Wicklung, insbesondere eine Hoch-Temperatur-Supraleiter (HTS)- Wicklung, auf.

Die WO 2010/022389 A1 offenbart ein Stromversorgungssystem, das für die gleichzeitige Versorgung von Schiffsantrieben und Betriebslasten geeignet ist. Das System umfasst mindestens einen Generator, der mit mindestens einer ersten und einer zweiten Ankerwicklung konfiguriert ist, die so konfiguriert sind, dass sie jeweils ein erstes und ein zweites Wechselstrom-Leistungssignal mit unterschiedlichen Spannungen ausgeben, wobei die mindestens zwei Ankerwicklungen in denselben Statorschlitzen angeordnet sind, so dass sie magnetisch gekoppelt sind. Das System umfasst ferner mindestens eine erste und eine zweite Gleichrichterschaltung, die mit dem Generator gekoppelt sind, um das erste und das zweite Wechselstrom-Leistungssignal in ein erstes und ein zweites Gleichstrom-Leistungssignal umzuwandeln.

Die WO 2005/049418 A2 beschreibt ein elektrisches Energieerzeugungs-, Verteilungs- und Bordstromversorgungssystem, das an unterschiedlichste, auch emissionsfreie Betriebszustände anpassbar ist und bei Ausfall von Teilbereichen seiner elektrischen Energieversorgungsnetze funktionsfähig gehalten werden kann.

In elektrischen Bordnetzen wird die elektrische Energie oft in verschiedenen Spannungsebenen und/oder in verschiedenen Spannungsformen (AC bzw. DC) benötigt. Dazu wird beispielsweise Primärenergie aus einer oder mehreren Verbrennungskraftmaschinen zur Verfügung gestellt und mittels eines oder mehrere Drehstromgeneratoren (Asynchrongenerator bzw. Synchrongenerator) in elektrische Energie umgewandelt. Der Synchrongenerator ist beispielsweise ein permanenterregter Synchrongenerator. Diese elektrische Energie wird insbesondere auf der höchsten im Bordnetz zur Verfügung stehenden Spannungsebenen (Versorgungsnetz obere Spannungsebene) erzeugt. Um weitere Spannungsebenen zu erzeugen werden zum Beispiel Transformatoren und/oder DC/DC-Wandler eingesetzt. Die Transformatoren haben in der Regel ein hohes Gewicht und Bauvolumen, Verluste in Höhe von ca. 1% und die Eingangs- und Ausgangs-Frequenz sind immer identisch. Beispielsweise wird die gesamte erzeugte Generatorleistung über die obere Spannungsebene eingespeist und auf einen Hautenergiebus verteilt. Der Hauptenergiebus ist in vielen Anlagen bzw. Bordnetzen ein 3 Phasen Wechselstrom Bus (Wechselstrom=AC), wodurch ein AC Netz aufgespannt ist. Die Verteilung der elektrischen Energie erfolgt dabei insbesondere über eine oder mehrere Schalttafeln. In AC Netzen ist die Frequenz eines unteren Netzes gleich der Frequenz des oberen Netzes. Dabei unterscheidet sich das untere Netz vom oberen Netz durch die Spannung, wobei das obere Netz eine höhere Spannung hat als das untere Netz. Die Verwendung eines AC Netzes mit einem AC Energiebus zur Verteilung der elektrischen Energie kann nachteilig sein, wenn in der oberen Spannungsebene die Frequenz variabel ist. Variable Frequenzen sind besondere die Folge von drehzahlvariablen Verbrennungsmaschinen. Um aus einem oberen AC Energiebus eine untere Spannungsebene zu versorgen werden in der Regel mehrere Transformatoren benötigt. Die Energie wird über den oberen AC Hauptenergiebus also über die obere Spannungsebene übertragen. Innerhalb einer Spannungsebene kann die Energie über eine Schaltanlage verteilt werden. Zur Verteilung von AC wird eine AC Schaltanlage verwendet. Die Spannungshöhe des Energiebusses bzw. der Spannungsebene hängen maßgeblich von der installierten Leistung ab. Die verschiedenen Verbraucher werden gespeist und die darunter liegenden Spannungsebenen mit Energie versorgt. Zur Verbindung der unterschiedlichen Spannungsebenen sind in AC Netzen Transformatoren notwendig, wodurch die Spannungsebenen die gleiche Frequenz haben. Das Übersetzungsverhältnis des verwendeten Transformators legt das Verhältnis der Spannungen fest.

Da auf der schwimmenden Einrichtung die Verbraucher unterschiedliche Anforderungen an das Energieversorgungssystem stellen und auch abhängig vom Betriebszustand der schwimmenden Einrichtung unterschiedliche Verbraucher Energie vom Energieversorgungssystem beziehen, ist dieses möglichst flexibel auszulegen. Eine Aufgabe der vorliegenden Erfindung ist es demnach, ein flexibles Energieversorgungssystem bzw. ein flexibles Verfahren zum Betrieb eines solchen Energieversorgungssystems bereit zu stellen.

Eine Lösung der Aufgabe gelingt nach Anspruch 1 bzw. 10. Weitere Ausgestaltungen der Erfindung ergeben sich nach den Ansprüchen 2 bis 9 und 11.

Ein Energieversorgungssystem für eine wassergebundene Einrichtung, sowie insbesondere für eine schwimmende Einrichtung, weist einen ersten Gleichspannungsbus für eine erste Gleichspannung und einen zweiten Gleichspannungsbus für eine zweite Gleichspannung auf. Dies bedeutet, dass der erste Gleichspannungsbus für eine erste Gleichspannungsebene geeignet bzw. vorgesehen ist und der zweite Gleichspannungsbus für eine zweite Gleichspannungsebenen geeignet bzw. vorgesehen ist. Die erste Gleichspannungsebene ist insbesondere höher als die zweite Gleichspannungsebene. Die erste Gleichspannungsebene entspricht also dem ersten Gleichspannungsbus und die zweite Gleichspannungsebene entspricht dem zweiten Gleichspannungsbus. Beispielsweise unterscheiden sich die Gleichspannungsebenen um einen Faktor zwischen 5 und 50. Es sind also Verhältnisse von z.B. 1:5 bis 1:20 möglich. Entsprechendes ergibt sich bei einer wassergebundenen bzw. schwimmenden Einrichtung, insbesondere ein Schiff, welche ein Energieversorgungssystem in einer der beschriebenen Ausgestaltungen aufweist.

Beispiele für eine wassergebundene Einrichtung sind: ein Schiff (z.B. Kreuzfahrer, Containerschiffe, Feeder-Schiffe, Supportschiffe, Kranschiffe, Tanker, Kampfschiffe, Landungsschiffe, Eisbrecher etc.), eine schwimmende Plattform, eine fest im Meeresgrund verankerte Plattform, etc.

Ein Energieversorgungssystem für eine wassergebundene Einrichtung, insbesondere eine schwimmende Einrichtung, ist auch mit einem ersten Gleichspannungsbus für eine erste Gleichspannung und mit einem zweiten Gleichspannungsbus für eine zweite Gleichspannung ausführbar, wobei das Energieversorgungssystem eine erste Energiequelle aufweist, wobei die erste Energiequelle ein Generatorsystem aufweist, welches ein erstes Wicklungssystem zur Speisung des ersten Gleichspannungsbusses aufweist und welches ein zweites Wicklungssystem zur Speisung des zweiten Gleichspannungsbusses aufweist. So können mit einem Generatorsystem verschiedene Spannungsebenen gespeist werden. Weist das Energieversorgungssystem weitere Energiequellen auf, so können auch diese ein derartiges Generatorsystem aufweisen.

Die schwimmende bzw. wassergebundene Einrichtung und/oder das Energieversorgungssystem weist gemäß der Erfindung eine erste Zone und eine zweite Zone auf. Auch hier soll, wie bereits obig angemerkt, im weiteren Fortgang unter einer schwimmenden Einrichtung auch eine wassergebundene Einrichtung verstanden werden. Die schwimmende Einrichtung kann auch mehr als zwei Zonen aufweisen. Die Art der Zonen kann unterschiedlich sein. So kann es sich bei einer Zone beispielsweise um eine Feuerzone handeln. Zonen können voneinander durch eine oder mehrere Schotten getrennt sein. Der Art bilden sich Kammern aus, welche beispielsweise dem Schutz vor Feuer und oder dem Schutz vor einem Untergang der schwimmenden bzw. wassergebundenen Einrichtung dienen können. Ein Schott bzw. Schotten kann luftdicht und/oder flüssigkeitsdicht und/oder brandhemmend ausgelegt bzw. ausgeführt sein. In einer schwimmenden Einrichtung wie beispielsweise einem Schiff kann es zum Beispiel zumindest ein Querschott und/oder ein Längsschott und/oder ein wasserdichtes Deck geben. Jedoch bilden sich Zonen bzw. Kammern. Eine Kammer kann eine Zone darstellen wie auch eine Zone eine Kammer darstellen kann. Das Energieversorgungssystem für die schwimmende bzw. wassergebundene Einrichtung weist eine erste Energiequelle und eine zweite Energiequelle auf, wobei die erste Energiequelle in der ersten Zone zur Speisung zumindest eines Gleichspannungsbusses der zumindest zwei Gleichspannungsbusse vorgesehen ist und wobei die zweite Energiequelle in der zweiten Zone zur Speisung zumindest eines Gleichspannungsbusses der zumindest zwei Gleichspannungsbusse vorgesehen ist. Die erste Energiequelle kann also beispielsweise zur Speisung nur des ersten Gleichspannungsbusses vorgesehen sein oder zur Speisung des ersten Gleichspannungsbusses und des zweiten Gleichspannungsbusses vorgesehen sein. Ebenso verhält es sich mit der zweiten Energiequelle welchen beispielsweise zur Speisung nur des ersten Gleichspannungsbusses vorgesehen sein oder zur Speisung des ersten Gleichspannungsbusses und des zweiten Gleichspannungsbusses vorgesehen sein kann. Die Speisung des jeweiligen Gleichspannungsbusses betrifft dabei insbesondere eine direkte Verbindung zu dem Gleichspannungsbus. Unter einer direkten Verbindung ist eine elektrische Verbindung zu verstehen, bei welcher kein weiterer DC-Bus zur Energieverteilung zwischengeschaltet ist. Eine direkte Verbindung kann jedoch beispielsweise einen Stromrichter, einen Transformator, einen Schalter, einen DC/DC Steller aufweisen. Energiequellen des Energieversorgungssystems können beispielsweise folgenden Typs sein: ein Dieselgenerator, ein Gasturbinengenerator, eine Batterie, ein Kondensator, SUPER-Caps, ein Schwungradspeicher, Brennstoffzellen sein.

Erfindungsgemäß ist das Energieversorgungssystem zumindest teilweise zonenabhängig gegliedert. Insbesondere entspricht die Gliederung örtlich der Zonenaufteilung für zumindest zwei Zonen. Zonen der wassergebundenen Einrichtung ergeben sich insbesondere durch eine bauliche Einrichtung wie ein Schott. Eine Gliederung des Energieversorgungssystems ergibt sich insbesondere durch Schalteinrichtungen, welche eine elektrische Verbindung trennen oder herstellen können. Durch derartige Schalteinrichtungen können Abschnitte im Energieversorgungssystem ausgebildet sein.

Der erste Gleichspannungsbus ist in Abschnitte unterteilbar. Die Unterteilung gelingt mittels MV-Schalteinrichtungen. Der erste Gleichspannungsbus ist also auf einer Mittelspannung. Der zweite Gleichspannungsbus ist auch in Abschnitte unterteilbar. Die Unterteilung gelingt mittels LV-Schalteinrichtungen. Der zweite Gleichspannungsbus ist also auf einer Niederspannung.

In einer Ausgestaltung des Energieversorgungssystem, wobei hier, wie auch bis hier und im Folgenden alle beschriebenen Energieversorgungssysteme gemeint sind, ist das erste Wicklungssystem für eine erste Spannung ausgelegt und das zweite Wicklungssystem für eine zweite Spannung ausgelegt, wobei die erste Spannung größer ist als die zweite Spannung. Das Generatorsystem weist beispielsweise nur einen Generator auf oder z.B. zwei Generatoren. Der Generator ist insbesondere ein Synchrongenerator. Auch Asynchrongeneratoren und/oder PEM-Generatoren können zum Einsatz kommen. Weist der Generator ein Niederspannungs-Wicklungssystem und ein MittelspannungsWicklungssystem auf, so hat dieser insbesondere ein großes Xd''. In einer Ausführung des Generators kann dieser ein großes xd" aufweisen. Hierdurch wird der Kurzschlussstrom-Beitrag des Generators reduziert und eine einfachere Auslegung eines Kurzschlussfesten Gleichrichters ermöglicht. Dieser reduzierte Kurzschlussstrom reduziert auch die mechanische Beanspruchung des Wellenstranges im Kurzschlussfall. Insbesondere die kurzschlussfeste Auslegung des Gleichrichters ermöglicht einen einfachen Aufbau des Energieversorgungssystems da keine zusätzlichen Kurzschluss-Schutz Elemente benötigt werden und damit eine direkte Verbindung ohne Trennorgane zwischen Generator und Gleichrichter möglich ist.

Dieses ist insbesondere auf der Mittelspannungsebene von Vorteil, da Trenn- oder Schutzorgane, wie z.B. Leistungsschalter oder Sicherungen, viel Platz benötigen, einen deutlichen Kostenfaktor haben oder zum Teil auch nicht verfügbar sind. Der dreiphasige Mittelspannungsanschluss des Generators kann beispielsweise an einen Diodengleichrichter oder an einen geregelten Gleichrichter angeschlossen sein und damit den Mittelspannungs-Gleichstrombus zu speisen. Dies gilt in vergleichbarer Weise auch für den dreiphasigen Niederspannungsanschluss für den Niederspannungs-Gleichstrombus. Der Stromrichter für den Niederspannungs- Gleichstrombus kann insbesondere auch ein Active Front End (AFE) sein. Dieser weist insbesondere einen Vier Quadranten Betrieb auf. Dadurch ist es beispielsweise möglich elektrische Energie aus Batterien in den Niederspannungs-Gleichstrombus zu speisen von dort über das Active Front End in den Mittelspannungs-Gleichstrombus. Der Active Front End ist ein Aktiver Gleichrichter der Energiefluss in beide Richtungen ermöglicht.

In einer Ausgestaltung des Energieversorgungssystems wird zwischen primären Energiequellen und sekundären Energiequellen unterschieden. Diese Typen von Energiequellen betreffen deren Zuordnung zu einem jeweiligen Bus. Diese Typen von Energiequellen betreffen jegliche Art von Energiequelle, wie z.B. einen Dieselgenerator, eine Batterie, eine Brennstoffzelle, eine Gasturbine mit Generator, SUPER-Caps, Schwungradspeicher, etc. Primäre Energiequellen sind dem ersten Gleichspannungsbus (DC-Bus) zugeordnet, wobei eine primäre Energiequelle insbesondere der Gewinnung elektrischer Energie für den Hauptantrieb der schwimmenden bzw. wassergebundenen Einrichtung dient. Beispielsweise kann eine oder können mehrere primäre Energiequellen auch der Versorgung eines weiteren, insbesondere nachgeordneten Gleichspannungsbusses (weist eine kleinere DC-Spannung auf als der versorgende DC-Bus) dienen. Diese Zuordnung bedeutet, dass zwischen dieser primären Energiequelle und dem ersten Gleichspannungsbus kein weiterer Gleichspannungsbus zwischengeschaltet ist. Sekundäre Energiequellen sind dem zweiten Gleichspannungsbus (DC-Bus) zugeordnet, wobei eine sekundäre Energiequelle insbesondere der Gewinnung elektrischer Energie für Betriebssysteme der schwimmenden bzw. wassergebundenen Einrichtung dient, welche nicht dem Hauptantrieb der schwimmenden Einrichtung dienen. Auch diese Zuordnung bedeutet, dass zwischen dieser sekundären Energiequelle und dem zweiten Gleichspannungsbus kein weiterer Gleichspannungsbus zwischengeschaltet ist. Es gibt in einer Ausgestaltung auch die Möglichkeit, zumindest eine sekundäre Energiequelle, die dem zweiten Gleichspannungsbus zugeordnet ist, zur Versorgung des ersten Gleichspannungsbusses und insbesondere zur Versorgung der Hauptantriebe zu nutzen. Betriebssysteme der schwimmenden Einrichtung sind beispielsweise (Bordversorgung, Hotelbetrieb, Waffensysteme, etc.). In einer Ausgestaltung des Energieversorgungssystems sind sekundäre Energiequellen derart gewählt, dass diese ggf. schneller auf Lastschwankungen reagieren können. Die Last ist beispielsweise zumindest ein Antriebsmotor zum Antrieb der schwimmenden Einrichtung und oder weitere elektrische Verbraucher der schwimmenden Einrichtung für beispielsweise Pumpen, Kompressoren, Klimaanlagen, Seilwinden, Bordelektronik, etc. Bei einem Kreuzfahrtschiff werden elektrische Verbraucher für beispielsweise die Klimaanlage, die Küchen, die Wäscherei, die Beleuchtung, etc. auch als Hotellast bezeichnet.

Das Energieversorgungsystem kann mehrere Energiequellen gleichen Typs aufweisen. In einer Ausgestaltung des Energieversorgungssystems können Energiequellen unterschiedlichen Typs in unterschiedlichen Zonen sein. Dadurch kann die Versorgungssicherheit innerhalb der schwimmenden Einrichtung beispielsweise in Notfällen und/oder in einem Fehlerfall erhöht werden. In einer weiteren Ausgestaltung können Energiequellen unterschiedlichen Typs in der gleichen Zone sein.

In einer Ausgestaltung des Energieversorgungssystems wird die Zwischenkreisspannung an der kleinsten Last, d.h. der kleinsten Leistung bemessen, so dass hierfür ein Inverter eingesetzt werden kann. Bei weiteren größeren Lasten wird so lange ein einzelner Inverter verwendet, solange dieser verfügbar ist. Für weitere größere Lasten, die für einen Inverter mit der gewählten Spannung zu groß sind, werden parallele Inverter oder Motoren mit mehreren Wicklungssystemen verwendet. Durch diese Vorgehensweise können Mittelspannungs- Gleichspannungssysteme kostenoptimiert realisiert werden.

Zum Bespiel wird die Zwischenkreisspannung bei einer Thrusterlast von 3,5 MW auf 4,5 kV Gleichspannung (3,3 kV Drehspannung) festgelegt. Die 3,5 MW ist die kleinste Last, die am Mittelspannungs-Gleichspannungssystem angeschlossen ist. Eine weitere Last mit 12 MW wird ebenfalls mit 3,3 kV Drehspannung, und damit mit 4,5 kV Gleichspannung betrieben. Diese Last wird mit zwei parallelen Umrichtern oder mit einer Maschine mit zwei Wicklungssystemen betrieben. Auch zwei Maschinen auf einer Welle sind möglich.

Mit dem Design Ziel den Mittelspannungs-Gleichspannungsbus im Spannungsbereich 3,2 kV bis 6 kV zu halten werden ein kostenoptimales System sichergestellt.

Größere Leistungen werden durch Parallelschaltung und/oder durch Mehrwicklungsmaschinen realisiert.

Die reduzierte Mittelspannungs-Gleichspannungsfestlegung reduziert auch das Bauvolumen und die Kosten für die Halbleiterschalter zwischen den Zonen als auch die Kosten für den Kurzschlussschutz der Inverter

In gleicher Weise kann auch bei den Gleichrichtern auf der Einspeiseseite vorgegangen werden.

Durch die Verwendung eines ersten Gleichspannungsbusses und eines zweiten Gleichspannungsbusses in der schwimmenden Einrichtung kann elektrische Energie in einfacher Weise ohne unnötige Verluste von einem Bus in den anderen Bus übertragen werden. Dies ist insbesondere in einem Fehlerfall vorteilhaft bei dem eine oder mehrere Energiequellen für den ersten Bus ausfallen. Erfolgte eine Verknüpfung von Energieebenen über eine AC Verbindung so kann dies insbesondere in einem Fehlerfall zu höheren Verlusten führen. In DC Netzen wird die Energie erst gleichgerichtet, um auf der oberen DC Spannung verteilt zu werden (Umwandlung 1). Anschließend muss aus der DC Spannung mittels eines Wechselrichters eine AC Spannung erzeugt werden (Umwandlung 2). Der Wechselrichter muss die gleichen Funktionen wie ein Generator erfüllen (Selektivität und Frequenzführung in der unteren Spannungsebene) Zur Anpassung der Spannung ist ein Transformator erforderlich (Umwandlung 3). Diese dreifache Umwandlung ist mit Verlusten in Höhe ca. 3-3,5% verbunden. Die Kosten für die Komponenten und die Gewichte sind sehr hoch. Die eingesetzten Wechselrichter sind empfindlich gegenüber harmonischen der unteren Spannungsebene. Das Aufschalten von Motoren und nicht linearen Lasten auf die eingesetzten Wechselrichter ist auch problematisch und limitiert. Mithilfe des vorgeschlagenen Energieversorgungssystems, welches einen ersten Gleichspannungsbus und einen zweiten Gleichspannungsbus aufweist, können Verluste reduziert werden.

In einer Ausgestaltung des Energieversorgungssystems weist dieses neben der ersten Energiequelle und der zweiten Energiequelle auch eine dritte Energiequelle auf. Die erste Energiequelle und die zweite Energiequelle sind beispielsweise primäre Energiequellen und die dritte Energiequelle ist eine sekundäre Energiequelle. Die dritte Energiequelle kann beispielsweise zum Peakshaving und/oder als Spinning Reserve verwendet werden. Dies bedeutet, dass Spitzen im Energieverbrauch der schwimmenden Einrichtung, welche nicht rasch von der primären Energiequelle gedeckt werden können durch die sekundäre Energiequelle gedeckt werden und/oder es kann Energie zur Verfügung gestellt werden, falls eine Energiequelle ausfällt

In einer Ausgestaltung des Energieversorgungssystems weist dieses einen Mittelspannungs-Gleichspannungsbus, mit einer Gleichspannung mit 3 kV bis 18 kV, auf der als Ring Bus ausgeführt ist und einen Niederspannungs-Gleichspannungsbus, mit einer Gleichspannung mit 0,4 kV bis 1,5 kV, auf der als Ring Bus ausgeführt ist.

In einer Ausgestaltung des Energieversorgungssystems kann als Energiebus, insbesondere als weiterer Hauptenergiebus oder auch als Ersatz für den DC Bus, zusätzlich zu einem DC Bus auch ein Dreiphasenwechselstrombus (AC Bus) verwendet werden. Auch auf eine Niederspannungsebene kann ein DC Verteilsystem (DC Bus) und/oder ein AC Verteilsystem (AC Bus) verwendet werden.

In einer Ausgestaltung des Energieversorgungssystems ist das erste Wicklungssystem elektrisch mit dem ersten Gleichspannungsbus zu dessen trafolosen Speisung verbunden. Durch den Wegfall eines Trafos lässt sich Gewicht, Volumen und/oder Kosten sparen.

In einer Ausgestaltung des Energieversorgungssystems ist das zweite Wicklungssystem elektrisch mit dem zweiten Gleichspannungsbus zu dessen trafolosen Speisung verbunden. Auch hier wird durch den Wegfall des Trafos Gewicht, Volumen und/oder Kosten gespart.

In einer Ausgestaltung des Energieversorgungssystems weist das Generatorsystem einen ersten Generator mit dem ersten Wicklungssystem und einen zweiten Generator mit dem zweiten Wicklungssystem aufweist, wobei der erste Generator und der zweite Generator mittels eines gemeinsamen Wellensystems antreibbar sind. Der erste Generator und der zweite Generator sind insbesondere steif, also starr gekoppelt. Durch die Verwendung zweier Generatoren für die zwei Wicklungssysteme lässt sich die Konstruktion der Generatoren einfach halten.

In einer Ausgestaltung des Energieversorgungssystems ist das Generatorsystem ein Multiwicklungssystemgenerator, wobei der Stator des Multiwicklungssystemgenerators das erste Wicklungssystem und das zweite Wicklungssystem oder weitere Wicklungssysteme aufweist. Derart ist ein kompaktes Generatorsystem ausbildbar.

In einer Ausgestaltung des Energieversorgungssystems weist der Multiwicklungssystemgenerator Nuten auf, welche das erste Wicklungssystem und das zweite Wicklungssystem betreffen. Dadurch kann ein kompakter Aufbau realisiert werden.

Erfindungsgemäß weist die wassergebundene Einrichtung, wie insbesondere die schwimmende Einrichtung, eine erste Zone, eine zweite Zone und eine zweite Energiequelle auf, wobei die erste Energiequelle in der ersten Zone zur Speisung zumindest eines Gleichspannungsbusses der zumindest zwei Gleichspannungsbusse vorgesehen ist und wobei die zweite Energiequelle in der zweiten Zone zur Speisung zumindest eines Gleichspannungsbusses der zumindest zwei Gleichspannungsbusse vorgesehen ist. So kann die Sicherheit der Versorgung der Gleichspannungsbusse mit elektrischer Energie verbessert werden.

In einer Ausgestaltung können bei dem Generator die beiden Wicklungssysteme so in den Nuten angeordnet sein, dass eine möglichst gute Entkopplung erreicht wird, um eine Beeinflussung der Wicklungssysteme zu vermeiden. Eine ausreichende Entkopplung wird erreicht, wenn die unterschiedlichen Wicklungssysteme in unterschiedlichen Nuten eingebracht sind.

Ein Energieversorgungssystem für eine wassergebundene Einrichtung, insbesondere eine schwimmende Einrichtung, ist auch mit einem ersten Gleichspannungsbus für eine erste Gleichspannung und mit einem zweiten Gleichspannungsbus für eine zweite Gleichspannung ausführbar, wobei eine erste Energiequelle zumindest drei speisende elektrische Verbindungen zu den Gleichspannungsbussen aufweist, wobei zumindest einer der Gleichspannungsbusse Abschnitte aufweist. Auch damit kann die Versorgungssicherheit es Energieversorgungssystems verbessert werden.

In einer Ausgestaltung des Energieversorgungssystems speist eine erste speisende Verbindung der zumindest drei speisenden elektrischen Verbindungen einen ersten Abschnitt und eine zweite speisende Verbindung der zumindest drei speisenden elektrischen Verbindungen speist einen zweiten Abschnitt des gleichen Gleichspannungsbusses, wobei eine dritte speisende Verbindung der zumindest drei speisenden elektrischen Verbindungen einen Abschnitt des weiteren Gleichspannungsbusses speist. So kann die Speisung mit elektrischer Energie über verschiedene Gleichspannungsbusse verteilt werden.

In einer Ausgestaltung des Energieversorgungssystems weist dieses eine vierte speisende Verbindung der ersten Energiequelle, wobei zwei der zumindest vier speisenden Verbindungen zur Speisung des ersten Gleichspannungsbusses in unterschiedlichen Abschnitten des ersten Gleichspannungsbusses vorgesehen sind und wobei zwei weitere der zumindest vier speisenden Verbindungen zur Speisung des zweiten Gleichspannungsbusses in unterschiedlichen Abschnitten des zweiten Gleichspannungsbusses vorgesehen sind. Dies erhöht die Betriebssicherheit der wassergebundenen Einrichtung.

Ein Energieversorgungssystem für eine wassergebundene Einrichtung, insbesondere eine schwimmende Einrichtung, ist erfindungsgemäß auch mit einem ersten Gleichspannungsbus für eine erste Gleichspannung und mit einem zweiten Gleichspannungsbus für eine zweite Gleichspannung ausführbar, wobei eine erste Energiequelle zumindest zwei speisende elektrische Verbindungen zu den Gleichspannungsbussen aufweist, wobei zumindest einer der Gleichspannungsbusse Abschnitte aufweist. Auch damit kann die Versorgungssicherheit es Energieversorgungssystems verbessert werden.

In einer Ausgestaltung des Energieversorgungssystems speist eine erste speisende Verbindung der zumindest zwei speisenden elektrischen Verbindungen einen ersten Abschnitt und eine zweite speisende Verbindung der zumindest zwei speisenden elektrischen Verbindungen speist einen zweiten Abschnitt des gleichen Gleichspannungsbusses oder die zweite speisende Verbindung der zumindest zwei speisenden elektrischen Verbindungen speist einen Abschnitt des weiteren Gleichspannungsbusses. So kann die Speisung mit elektrischer Energie über verschiedene Gleichspannungsbusse verteilt werden.

In einer Ausgestaltung des Energieversorgungssystems weist dieses eine dritte und vierte speisende Verbindung der ersten Energiequelle, wobei zwei der zumindest vier speisenden Verbindungen zur Speisung des ersten Gleichspannungsbusses in unterschiedlichen Abschnitten des ersten Gleichspannungsbusses vorgesehen sind und wobei zwei weitere der vier speisenden Verbindungen zur Speisung des zweiten Gleichspannungsbusses in unterschiedlichen Abschnitten des zweiten Gleichspannungsbusses vorgesehen sind. Dies erhöht die Betriebssicherheit der wassergebundenen Einrichtung.

In einer Ausgestaltung des Energieversorgungssystems speist eine erste speisende Verbindung der zumindest zwei speisenden elektrischen Verbindungen einen ersten Abschnitt und eine zweite speisende Verbindung der zumindest zwei speisenden elektrischen Verbindungen speist einen zweiten Abschnitt des gleichen Gleichspannungsbusses, wobei eine dritte speisende Verbindung einen Abschnitt des weiteren Gleichspannungsbusses speist. So kann die Speisung mit elektrischer Energie über verschiedene Gleichspannungsbusse verteilt werden.

In einer Ausgestaltung des Energieversorgungssystems weist die wassergebundene Einrichtung eine erste Zone und eine zweite Zone auf, wobei sich der erste Gleichspannungsbus und/oder der zweite Gleichspannungsbus über die erste Zone und/oder die zweite Zone erstreckt, wobei die erste Energiequelle zur Speisung von Abschnitten des ersten Gleichspannungsbusses und/oder des zweiten Gleichspannungsbusses in unterschiedlichen Zonen vorgesehen ist. Dadurch kann die Redundanz für die Versorgung der Gleichspannungsbusse mit elektrischer Energie erhöht werden.

Erfindungsgemäß weist das Energieversorgungssystem eine zweite Energiequelle auf, wobei die erste Energiequelle in der ersten Zone zur Speisung zumindest eines Gleichspannungsbusses der zumindest zwei Gleichspannungsbusse vorgesehen ist und wobei die zweite Energiequelle in der zweiten Zone zur Speisung zumindest eines Gleichspannungsbusses der zumindest zwei Gleichspannungsbusse vorgesehen ist. So können beide Gleichspannungsbusse mit elektrischer Energie versorgt werden, auch wenn nur eine Energiequelle aktiv ist.

In einer Ausgestaltung des Energieversorgungssystems weist ein Abschnitt des ersten Gleichspannungsbusses sowohl eine speisende Verbindung zur ersten Energiequelle als auch eine weitere speisende elektrische Verbindung zur zweiten Energiequelle auf. Auch dadurch kann die Flexibilität des Systems verbessert werden.

In einer Ausgestaltung des Energieversorgungssystems weist ein Abschnitt des zweiten Gleichspannungsbusses sowohl eine speisende Verbindung zur ersten Energiequelle als auch eine weitere speisende elektrische Verbindung zur zweiten Energiequelle auf. Speisende Verbindungen können hier aber auch im Allgemeinen einen Schalter aufweisen, um die speisende Verbindung (die speisende elektrische Verbindung) flexibel aktivieren bzw. deaktivieren zu können.

In einer Ausgestaltung des Energieversorgungssystems ist zumindest einer der Gleichspannungsbusse als ein Ringbus ausbildbar bzw. ausgebildet. Der Ringbus ist durch Schalter auftrennbar. Insbesondere kann ein Ringbus in zwei kleinere Busse unterteilt werden. Die kleineren Busse können ihrerseits durch Zusatz Elemente in Ringbusse verwandelt werden. Durch die Möglichkeit der Auftrennung des Ringbusses kann flexibel auf Fehler reagiert werden.

In einer Ausgestaltung des Energieversorgungssystems sind die Schalter zur Auftrennung des Busses und/oder Ringbusses als ultraschnelle Schaltelemente ausgeführt und insbesondere als Halbleiter- Schaltorgane oder Hybrid- Schaltorgane, die eine Auslösezeit im Bereich von 1 us bis 150 us aufweisen. Hybrid-Schaltorgane weisen mechanische und Halbleiter und/oder Elektronische Elemente aus. Die schnelle Auslösung reduziert den auftretenden Kurzschlussstrom und verhindert eine negative Auswirkung des Fehlers auf die benachbarte Zone. Dieses verhindert weitere Ausfälle von benachbarten Zonen.

Erfindungsgemäß ist der erste Gleichspannungsbus für eine erste Gleichspannung vorgesehen und der zweite Gleichspannungsbus für eine zweite Gleichspannung vorgesehen, wobei die erste Gleichspannung größer ist als die zweite Gleichspannung. Insbesondere ist die kleinere Spannung eine Niederspannung (LV) und die höhere Spannung eine Mittelspannung (MV). Die Niederspannung ist insbesondere zwischen 400V und 1000V. Zukünftig also realisiert sind auch Niederspannungssysteme bis zu einer Spannung von 1500V zu erwarten. Die Mittelspannung ist größer 1000V bzw. 1500V, insbesondere zwischen 10kV und 20kV oder zwischen 5kV und 20kV. Als Werte für die Mittelspannung bieten sich beispielsweise folgende an: 5kV, 6kV, 12kV und 18kV. Insbesondere bieten die unterschiedlichen Spannungsebenen der Gleichspannungsbusse auch eine kostenoptimale Zuordnung (insbesondere wegen der Kosten der Leistungselektronik) der Verbraucher, wobei hier die Verbraucher kleinerer Leistung der kleineren Spannung zugeordnet werden. Unter Zuordnung ist die elektrische Anbindung des Verbrauchers an den Gleichspannungsbus zu verstehen.

In einer Ausgestaltung des Energieversorgungssystems ist der erste Gleichspannungsbus mit dem zweiten Gleichspannungsbus beispielsweise über zumindest einer der folgenden Kopplungen verbunden:
o DC/DC-Wandler
o Wechselrichter - Transformator - Gleichrichter

Erfindungsgemäß ist also die erste Gleichspannung größer als die zweite Gleichspannung. Die erste Gleichspannung ist eine Mittelspannung (MV: Medium Voltage - Mittelspannung) und die zweite Gleichspannung eine Niederspannung (LV: Low Voltage - Niederspannung), wobei eine Energieübertragung vom ersten Gleichspannungsbus zum zweiten Gleichspannungsbus möglich ist wie auch eine Energieübertragung vom zweiten Gleichspannungsbus zum ersten Gleichspannungsbus möglich ist. Dies erhöht die Flexibilität, Einsatzfähigkeit und/oder und Fehlertoleranz des Energieversorgungssystems.

Erfindungsgemäß ist der erste Gleichspannungsbus für eine erste Gleichspannung vorgesehen und der zweite Gleichspannungsbus ist für eine zweite Gleichspannung vorgesehen, wobei die erste Gleichspannung größer ist als die zweite Gleichspannung. So können Verbraucher, wie Motoren, Elektronik, Heizungen, etc., über eine geeignete Spannungsebene mit elektrischer Energie versorgt werden.

In einer Ausgestaltung des Energieversorgungssystems ist zumindest einer der Gleichspannungsbusse für eine Erstreckung über zumindest zwei Zonen vorgesehen. Dadurch kann zum Beispiel eine Zone mit elektrischer Energie versorgt werden, welche selbst keine Energiequelle hat.

In einer Ausgestaltung des Energieversorgungssystems ist mittels eines Bypasses eine Zone überbrückbar. Der Bypass kann als Teil eines Ringbusses verstanden werden, wobei Abzweigungen im Bereich des Bypasses aufgetrennt sind. In einer Ausgestaltung kann der Bypass auch über eine weitere Gleichspannungsebene realisiert sein. So kann beispielsweise eine Zone, welche unter Wasser steht oder in dem Feuer ausgebrochen ist von der elektrischen Versorgung getrennt werden ohne dass eine weitere Zone, in welche der entsprechende Bus reicht, beeinträchtigt ist.

In einer Ausgestaltung des Energieversorgungssystems weist zumindest einer der Gleichspannungsbusse Abschnitte auf, wobei die Abschnitte zonenbezogen sind. Die Abschnitte sind voneinander beispielsweise mittels Schalter trennbar. Ein Schalter kann dabei ein mechanischer Schalter und/oder ein mechanischer und Halbleiterschalter und/oder ein Halbleiterschalter sein.

In einer Ausgestaltung des Energieversorgungssystems können zwei Zonen zwei Abschnitte aufweisen. In einer weiteren Ausgestaltung kann eine Zone zwei Abschnitte vom gleichen Bus aufweisen. In einer weiteren Ausgestaltung weist jede Zone mit einem Abschnitt eine eigene Energiequelle auf.

In einer Ausgestaltung des Energieversorgungssystems ist die erste Energiequelle in der ersten Zone zur Speisung des ersten Gleichspannungsbusses und des zweiten Gleichspannungsbusses vorgesehen. So können in einer Zone beispielsweise beide Spannungsebenen mit Energie versorgt werden.

In einer Ausgestaltung des Energieversorgungssystems ist der erste Gleichspannungsbus zur Speisung des zweiten Gleichspannungsbusses vorgesehen. So kann durch eine Energiequelle, welche an dem ersten Gleichspannungsbus angeschlossen ist, auch der zweite Gleichspannungsbus mit Energie versorgt werden.

In einer Ausgestaltung des Energieversorgungssystems weist dieses einen Drehstrombus auf, wobei der zweite Gleichspannungsbus zur Speisung des Drehstrombusses vorgesehen ist. Dabei kann der Drehstrombus sich über zumindest zwei Zonen erstrecken oder auf eine Zone begrenzt sein. In einer Ausgestaltung ist es auch möglich, dass durch den Drehstrombus eine oder mehr Zonen überbrückt werden, d.h. es gibt einen Bypass zumindest einer Zone. Der Drehstrombus (Wechselstrom) ist zur Versorgung von Wechselstromversorgern vorgesehen. Dies können beispielsweise in einem Kreuzfahrtschiff auch an Steckdosen anschließbare Küchengeräte wie Toaster, Waffeleisen oder Kaffeemaschinen sein.

In einer Ausgestaltung des Energieversorgungssystems ist es möglich, insbesondere abhängig von einer Schiffsapplikationen, zu einem Mittelspannungs-DC Verteilnetz zumindest teilweise ein AC Verteilnetztes auf der Niederspannungsebene zu integrieren oder einzelne DC-Inseln innerhalb der Zonen auszubilden, die zwischen den Zonen über AC-Verbindungen verbunden sind. In einer Ausgestaltung des Energieversorgungssystems sind einzelne DC-Inseln über DC/DC Konverter miteinander verbunden.

In einer Ausgestaltung des Energieversorgungssystems ist eine Zone autark betreibbar, wobei diese autarke Zone zumindest eine der Energiequellen aufweist, wobei der erste Gleichspannungsbus und/oder der zweite Gleichspannungsbus speisbar sind, wobei der erste Gleichspannungsbus und der zweite Gleichspannungsbus mit ihrem jeweiligen Abschnitt in dieser Zone auch verbleiben. Ein Abschnitt geht also nicht über eine Zone hinaus. So können innerhalb einer schwimmenden Einrichtung autarke Bereiche errichtet werden, welche auch bei Ausfall oder Beschädigung einer der Zonen der schwimmenden Einrichtung für sich arbeitsfähig sind.

In einer Ausgestaltung des Energieversorgungssystems weist die schwimmende Einrichtung zumindest zwei Längszonen und zumindest zwei Querzonen auf, wobei zwei Abschnitte zumindest eines Gleichspannungsbusses in derselben Querzone sind und auch in unterschiedlichen Längszonen. So können beispielsweise Fehler, welche auf einer Seite eines Schiffes auftreten, bezüglich der Auswirkung auf die elektrische Energieversorgung begrenzt werden. Die Längszone ist beispielsweise durch ein Längsschott begrenzt. Die Querzone ist beispielsweise durch ein Querschott begrenzt.

Erfindungsgemäß weist zumindest einer der Gleichspannungsbusse eine Schalteinrichtung (Schalter) auf. Die Schalteinrichtung, welche mechanisch und/oder elektrisch durch Halbleiter arbeitet, dient zum Trennen bzw. Verbinden von Abschnitten der jeweiligen Busse.

Das Auslösen der Schalteinrichtung zum Trennen bzw. Verbinden kann aufgrund von Schaltbefehlen erfolgen, welche aufgrund eines elektrischen Zustandes generiert werden und/oder aufgrund von Schaltbefehlen erfolgen, welche aufgrund von Ereignissen in einer Zone generiert werden (z.B. Wassereinbruch, Feuer, etc.).

In einer Ausgestaltung des Energieversorgungssystems ist die Schalteinrichtung im Gleichspannungsbus ein Fehlertrennschalter, wobei der Fehlertrennschalter insbesondere bei einem Kurzschlussfehler den Bus trennt. Durch diese Funktion kann der Fehlertrennschalter auch als Kurzschlussschalter bezeichnet werden. Die Schalteinrichtung trennt insbesondere zwei Zonen. Die Schalteinrichtung ist beispielsweise ein Schnellschalter, der eine sichere Trennung von Abschnitten eines Busses ermöglicht. So kann ein Kurzschluss in einer Zone auf diese Zone begrenzt werden. Andere Zonen bleiben von einem Kurzschluss in einer der Vielzahl von Zonen weitestgehend unberührt. Ein Herunterfahren und Wiederhochfahren der Energieversorgung im Falle eines Kurzschlusses ist damit vermeidbar. Die Wahrscheinlichkeit eines Blackouts für die gesamte schwimmende Einrichtung kann damit reduziert werden.

In einem Verfahren zum Betrieb eines solchen Energieversorgungssystems einer schwimmenden Einrichtung, wobei die schwimmende Einrichtung eine erste Zone und eine zweite Zone aufweist, wobei die schwimmende Einrichtung einen ersten Gleichspannungsbus für eine erste Gleichspannung und einen zweiten Gleichspannungsbus für eine zweite Gleichspannung aufweist, wobei die schwimmende Einrichtung eine erste Energiequelle und eine zweite Energiequelle aufweist, wird elektrische Energie von der ersten Zone in die zweite Zone oder von der zweiten Zone in die erste Zone übertragen. So können Zonen beispielsweise unabhängig davon, ob diese eine Energiequelle aufweisen mit elektrischer Energie versorgt werden.

Bei einem Verfahren zum Betrieb eines Energieversorgungssystems für eine wassergebundene Einrichtung, mit einem ersten Gleichspannungsbus für eine erste Gleichspannung und mit einem zweiten Gleichspannungsbus für eine zweite Gleichspannung, mit einer ersten Energiequelle, wobei die erste Energiequelle ein Generatorsystem aufweist, welches ein erstes Wicklungssystem zur Speisung des ersten Gleichspannungsbusses aufweist und welches ein zweites Wicklungssystem zur Speisung des zweiten Gleichspannungsbusses aufweist, wird mittels des ersten Wicklungssystems eine erste Spannung erzeugt und mittels des zweiten Wicklungssystems eine zweite Spannung erzeugt, wobei die zweite Spannung kleiner ist als die erste Spannung, wobei zum Antrieb des Generatorsystems ein Diesel oder eine Gasturbine verwendet wird. Dieses wie auch weitere Verfahren können durch weitere Ausgestaltungen ergänzt und/oder kombiniert werden.

In einer Ausgestaltung des Verfahrens wird die Speisung durch das erste Wicklungssystem oder die Speisung durch das zweite Wicklungssystem unterbunden. So kann beispielsweis bei einem Kreuzfahrtschiff in einem Hafen dessen Hotellast über nur ein Wicklungssystem bedient werden. Der Schalter zum bzw. beim MV-System (MV-Bus) kann also aufgemacht werden, falls nur Energie für den LV-Bus benötigt wird.

Bei einem Verfahren zum Betrieb eines Energieversorgungssystems für eine wassergebundene Einrichtung, mit einem ersten Gleichspannungsbus für eine erste Gleichspannung und mit einem zweiten Gleichspannungsbus für eine zweite Gleichspannung, mit einer ersten Energiequelle, welche zumindest zwei oder zumindest drei speisende elektrische Verbindungen zu den Gleichspannungsbussen aufweist, wobei zumindest einer der Gleichspannungsbusse Abschnitte aufweist, werden die Gleichspannungsbusse mit elektrischer Energie versorgt. Die speisenden elektrischen Verbindungen weisen beispielsweise Schalter auf, um die Verbindung zu trennen oder zu schließen. So können beispielsweise fehlerhafte Bereiche (z.B. durch einen Kurzschluss) des Energieversorgungssystems von korrekt arbeitenden Bereichen getrennt werden.

In einer Ausgestaltung des Verfahrens wird ein hier beschriebenes Energieversorgungssystem bei der Durchführung des Verfahrens verwendet.

In einer Ausgestaltung zumindest einer der Verfahren wird im Fall einer Störung, z.B. Kurzschluss, Erdschluss, Wassereinbruch, Feuer, in einer Zone zumindest einer der Gleichstrombusse schottabhängig, z.B. zonenabhängig, getrennt.

In einer Ausgestaltung zumindest eines der Verfahren wird im Fall einer Störung ein Schott geschlossen und zumindest einer der Gleichstrombusse wird schottabhängig getrennt. So kann insbesondere im Fall einer Störung diese Störung auf eine Zone beschränkt werden.

In einer Ausgestaltung zumindest eines der Verfahren wird ein erstes Energiemanagement für zumindest die erste Zone durchgeführt und ein zweites Energiemanagement für zumindest die zweite Zone. So kann beispielsweise jede Zone, welche eine Energiequelle aufweist, ein Energiemanagement durch ein Energiemanagementsystem aufweisen, wobei die Energiemanagementsysteme unterschiedlicher Zonen miteinander datentechnisch verbindbar sind. Insbesondere kann ein Master Energiemanagementsystem definiert sein, welches den Energiefluss zwischen den Zonen, welche von den einzelnen Energiemanagement Systemen verwaltet werden, steuert und/oder regelt. Zur Datenübertragung kann ein kabelgebundenes bzw. ein funkbasiertes Übertragungssystem verwendet werden. Durch das funkbasierte Übertragungssystem können Störungen, welche beispielsweise durch mechanische Schäden innerhalb einer Zone auftreten, besser gemeistert werden.

In einer Ausgestaltung ist nur ein Energiemanagementsystem vorhanden, wobei im Fehlerfall jede Zone autark betreibbar ist, auch bei Ausfall des übergeordneten Energiemanagementsystem. Hierfür weist eine Zone zumindest ein autarkes Automatisierungssystem auf.

In einer Ausgestaltung zumindest eines der Verfahren kann dieses mit jeder der hier beschriebenen Ausgestaltungen und Kombinationen des Energieversorgungssystems verwendet werden. Durch die hohe Flexibilität des Verfahrens bzw. des Energieversorgungssystems ist ein flexibler Betrieb der schwimmenden Einrichtung möglich.

Mit dem hier beschriebenen Energieversorgungssystem kann eine Netzwerksarchitektur für leistungsstarke Schiffsbordnetze mit mindestens zwei Spannungsebenen realisiert werden. In DC Netzen ist die elektrische Energie gleichgerichtet und über den gemeinsamen DC Bus verteilt. Große AC Verbraucher, wie auch kleine, wie z.B. Haupt- und Hilfsantriebe, werden über Wechselrichter aus dem DC Bus gespeist. AC Unternetze benötigen einen Wechselrichter und einen Transformator. Die Spannung kann, wie bei einem herkömmlichen AC Hauptnetz, über das Übersetzungsverhältnis des Transformators gewählt werden. Die Frequenz ist unabhängig von der Drehzahl der Generatoren durch den Wechselrichter einstellbar. Durch den Einsatz, insbesondere vermehrten Einsatz, von Gleichspannungsbussen können die in den AC Netzen vorhandenen Probleme bezüglich eines hohen Gewichts der Transformatoren und unterschiedliche Frequenzen der Netze in Bezug zum Generator vermieden werden. Beim Einsatz einer DC Netzwerkarchitektur mit mindestens zwei DC Spannungsebenen (Mittelspannung (MV) und Niederspannung (LV)) wird die Notwendigkeit des Einsatzes von Netzfrequenz-Transformatoren, z.B. für 50Hz oder 60Hz, reduziert. Die Netzwerksarchitektur zeichnet sich insbesondere durch mindestens zwei DC Bussysteme (LV und MV) aus, die als geschlossener Bus ausgeprägt sein können. Diese DC Ring-Busse werden insbesondere ermöglicht durch Verwendung eines sehr schnellen Halbleiter-Schalters für LV und MV um die Integrität der einzelnen Busabschnitte in den Zonen im Fehlerfall sicherzustellen. Dadurch wird vermieden, dass fehlerhafte Busabschnitte zu Ausfällen anderer Busabschnitte führen. Die Integration eines LV DC Ring-Busses zusätzlich zu einem MV Ring-Bus ermöglicht die Anbindung von dezentralen Energiespeichersystemen an dem LV DC Ring-Bus und durch den geschlossenen Bus die Nutzung und Verteilung der Energie. Dabei stellen die dezentralen Energiespeichersystemen insbesondere sekundäre Energiequellen dar. Der Einsatz mehrerer geschlossener DC Ring-Busse ermöglicht insbesondere auch eine bessere Möglichkeit der Leistungsaufteilung und/oder Energieverteilung zwischen den Ring-Bussen der unterschiedlichen Spannungsebenen. Eine Möglichkeit der Verbindung der verschiedenen Spannungsebenen besteht über eine DC/DC Konverter. Eine andere Möglichkeit liegt darin, auf der AC Seite des Generators über einen Trafo und einen Gleichrichter den weiteren DC Ring-Bus zu versorgen, während der DC Ring-Bus mit der höheren Leistung / höheren Spannung direkt über eine Gleichrichter versorgt wird. In dem Fall, dass Energiespeicher an dem Niederspannungs- DC Ring Bus angeschlossen sind, kann der Gleichrichter des Niederspannungs-Ring-Busses auch als aktiver Inverter ausgeführt werden, um den Energiefluss in beide Richtungen zu ermöglichen. Die Einspeisung des Generators über Gleichrichter oder gesteuerte Gleichrichter ermöglicht auch eine höhere Frequenz der Generator Ausgangsspannung, was den erforderlichen Transformator in Gewicht und Abmessung verkleinert.

In einer Ausgestaltung des Energieversorgungssystems weist ein Generator zumindest zwei Spannungsebenen auf. Damit ist eine weitere Optimierung des Systems und eine Vermeidung eines schweren Transformators möglich. Durch den Einsatz von Generatoren mit mindestens zwei Spannungsebenen kann eine erste Spannungsebene und eine zweite Spannungsebene versorgt werden. Dies betrifft insbesondere den ersten Gleichspannungsbus und den zweiten Gleichspannungsbus gleich, welche jeweils über Gleichrichter mit dem Generator verbunden sind. Dadurch kann die mehrfache Umwandlung von Energie wie bei AC Netzen vermieden werden. Sinnvoll sind dabei Anordnungen, welche die obere und die zweite Spannungsebene abdecken, da die Leistungen in der 2ten und weiteren unteren Spannungsebenen immer weiter abnehmen.

In einer weiteren Ausgestaltung kann der Gleichrichter auf dem zweiten Gleichspannungsbus auch als aktiver Gleichrichter ausgeführt werden, wobei dieser einen Energiefluss in beide Richtungen zulässt und/oder auch in der Lage ist ein Netz zu bilden. Hierdurch kann Energie von dem zweiten Gleichspanungsbus, als Niederspannungsbus betrieben, Energie über den stehenden, nicht drehenden, Generator zum ersten Gleichspannungsbus, als Mittelspannungsbus betrieben, transportiert werden.

In einer Ausgestaltung des Energieversorgungssystems kann die Generatorfrequenz in gewissen Grenzen frei gewählt werden. Bei Einsatz von Generatoren mit separaten Wicklungen sind auch unterschiedliche Frequenzen für die unterschiedlichen Spannungen möglich. Die Frequenzen und andere Maschinenparameter haben Einfluss auf die Stabilität des zugeordneten DC Netzes. Die beiden Spannungsebenen werden durch unterschiedliche Generatorwicklungen bzw. Aktivteile unabhängig voneinander gespeist. Es ist dabei unerheblich, ob die Aktivteile in einem Gehäuse auf einer Welle oder in Tandemanordnung aufgestellt werden. Auch der Betrieb an zwei Wellenenden ist möglich.

In einer Ausgestaltung des Energieversorgungssystems ist die Aktivteillänge des Generators verkürzt. Ein Generator kann so beispielsweise zwei unterschiedliche Aktivteillänge aufweisen. Dies gelingt beispielsweise durch die Verwendung neuer Fertigungstechnologien wie dem 3D Druck. Mögliche Einsparungen ergeben sich beispielsweise im Bereich der Wickelköpfe. Damit werden auch Generatoren sinnvoll, die trotz mehrerer hintereinander liegender Wicklungen nicht oder nur unwesentlich länger werden.

Durch eine neue Netzwerkarchitektur für Schiffe mit großen Bordnetzleistungen und/oder Hotelleistungen (z.B. Kreuzfahrtschiffe, Navy (neue Klassen mit erhöhten Bedarf an elektrischer Leistung zusätzlich zu den Antriebsleistungen, FPSO; FSRU; ... )) kann mit der Integration mehrerer geschlossener DC Ring-Busse auf unterschiedlichen Spannungsebenen eine effiziente Energieversorgung realisiert werden. Der verstärkte Einsatz von DC Bussen ermöglicht die Reduzierung von Netz-Verteilertransformatoren, z.B. 50Hz oder 60Hz, welche für AC Netze notwendig sind.

Auf Basis einer der beschriebenen Ausgestaltungen des Energieversorgungssystems kann in der schwimmenden Einrichtung auf eine Umwandlung AC/DC/AC in der oberen Spannungsebene verzichtet werden und die Umwandlung DC/AC/DC zwischen den Spannungsebenen vereinfacht werden. Ist das Unternetz, also das Netz mit einer niedrigeren Spannung, ein DC Netz, kann die Frequenz der speisenden AC Spannung optimal gewählt werden.

In einer Ausgestaltung kann der Einsatz mehrerer DC Ring-Busses mit verschiedenen Spannungseben durch schnell schaltende Halbleiterschalter sichergestellt werden und ermöglicht eine optimalere und sichere Lastverteilung zwischen den Bussen und eine optimalere Verteilung und Nutzung von Energiespeichern zwischen den einzelnen Zonen. Die Verbraucher der zweiten und darunter liegenden Spannungsebene können mit einer festen, frei vergebbaren Frequenz, gespeist werden, die nicht von der Drehzahl der Dieselgeneratoren abhängig ist, auch wenn die obere Spannungsebene mit variabler Frequenz betrieben wird.

In herkömmlichen Netzen, z.B. bei Kreuzfahrtschiffen, werden die Verteiltransformatoren für die zweiten Spannungsebenen redundant ausgelegt. Beträgt die Hotelleistung zum Beispiel 10MW beträgt die installierte Summenleistung der Verteiltransformatoren mindesten 20MW. Aufgrund von zusätzlichen Sicherheiten und unter Berücksichtigung von Gleichzeitigkeitsfaktoren erhöht sich dieser Wert noch einmal deutlich auf Werte zwischen 25MW und 30MW. Die Generatoren, welche an der ersten Spannungsebene angeschlossen sind, müssen für die zweite Spannungsebene aber in Summe nur die 20MW zur Verfügung stellen.

Die verschiedenen beschriebenen Energieversorgungssysteme bzw. wassergebundenen Einrichtungen, wie auch die beschriebenen Verfahren, können in ihren Merkmalen variabel kombiniert werden. Dadurch lässt sich das entsprechende System, die entsprechende Einrichtung bzw. das entsprechende Verfahren, z.B. an einen Einsatz in einem Kreuzfahrtschiff, einem Kranschiff, einer Ölplattform, etc. anpassen.

In einer Ausgestaltung des Energieversorgungssystems weist dieses eine elektrische Welle auf. Dies ist eine elektrische Antriebslösung, bei der zumindest ein Generator und zumindest ein Antriebsmotor ohne zwischengeschaltete Umrichter bzw. Stromrichter miteinander gekoppelt sind. Bei einer derartigen Antriebslösung werden ein oder mehrere drehzahlveränderbare Antriebsmotoren (d.h. die Motoren zum Antrieb der Propeller) ohne zwischengeschalteten Umrichter oder Stromrichter direkt mit der von einem oder mehreren drehzahlveränderbaren Generatoren erzeugten Spannung variabler Amplitude und variabler Frequenz betrieben. Derartige Generatoren können über einen Gleichrichter auch zumindest einer der Gleichspannungsbusse speisen. Bei einer elektrischen Welle erfolgt die Steuerung und/oder Regelung der Motoren und somit der Vortriebseinheiten somit indirekt durch eine Steuerung und/oder Regelung der Verbrennungskraftmaschinen zum Antrieb der Generatoren. Die Antriebsmotoren sind dabei elektrisch fest mit den Generatoren gekoppelt, d.h. eine Drehbewegung der Generatoren bewirkt eine entsprechende proportionale Drehbewegung der elektrischen Antriebsmotoren. Es wird somit die Funktion einer mechanischen Welle mit Hilfe von elektrischen Maschinen nachgebildet. Eine derartige Antriebslösung ist als elektrische Welle bezeichnet. Es ist auch möglich aus der elektrischen Welle über einen Bordnetzumrichter elektrische Energie auszukoppeln, d.h. ein Bordnetzumrichter wandelt die von dem (den) Generator(en) erzeugte Spannung variabler Amplitude und variabler Frequenz in eine Spannung mit konstanter Amplitude und konstanter Frequenz für ein Bordnetz um. Dem Bordnetz ist beispielsweise der LV-Gleichspannungsbus zugeordnet, weist diesen also auf. Eine elektrische Antriebswelle umfasst beispielsweise zumindest einen drehzahlveränderbaren Generator zur Erzeugung einer Spannung mit variabler Amplitude und variabler Frequenz und zumindest einen mit dieser Spannung versorgten drehzahlveränderbaren Antriebsmotor. Der zumindest eine Generator weist dabei insbesondere eine Supraleiter-Wicklung, insbesondere eine Hoch-Temperatur-Supraleiter (HTS)- Wicklung, auf. Bei der Supraleiter-Wicklung kann es sich um eine Ständerwicklung oder um eine rotierende Läuferwicklung des Generators handeln. Ein Generator mit einer Supraleiter-Wicklung weist insbesondere einen im Vergleich zu einem konventionellen Generator ohne Supraleiter-Wicklung wesentlich größeren magnetischen Luftspalt zwischen Läufer und Ständer auf. Dies liegt vor allem daran, dass der Supraleiter durch einen Vakuumkryostaten oder eine ähnliche Kühleinrichtung gekühlt wird, dessen bzw. deren Wandung im Luftspalt verläuft. Der relativ große magnetische Luftspalt bewirkt, dass der Generator eine wesentlich geringere synchrone Reaktanz als ein konventioneller Generator aufweist. Dies führt dazu, dass bei gleicher elektrischer Leistung ein HTS-Generator im Vergleich zu einem herkömmlichen Generator eine deutlich steifere Strom-Spannungs-Kennlinie aufweist. Hierdurch kommt es bei Lastaufschaltungen oder -stößen zu keinem Einbruch der von dem Generator erzeugten Spannung. Spannungs- und Frequenzschwankungen in der elektrischen Welle können hierdurch reduziert werden. Damit wird keine aufwändige Regelung für die elektrische Welle zur Stabilisierung der Spannung des Fahrnetzes und der Drehzahl der Antriebsmotoren bzw. der Vortriebseinheit benötigt. Wenn auch der zumindest eine Antriebsmotor eine Supraleiter-Wicklung, insbesondere eine Hoch-Temperatur-Supraleiter (HTS)- Wicklung, aufweist, kann er bei geringer Baugröße sehr leistungs- und drehmomentstark ausgebildet werden, was insbesondere für einen Einsatz eines Wasserfahrzeuges im Eis wichtig ist. In einer Ausgestaltung ist die Supraleiter-Wicklung eine rotierende Läuferwicklung. Bei dieser ist die zu kühlende Oberfläche kleiner als bei einer Supraleiter-Ständerwicklung gehalten werden kann. Im Fall mehrerer drehzahlveränderbarer Generatoren zur Erzeugung jeweils einer Spannung mit variabler Amplitude und variabler Frequenz umfasst die elektrische Welle auch eine Generator-Synchronisiereinrichtung zur Synchronisierung der Amplitude, Frequenz und Phase der von den Generatoren erzeugten Spannungen.

In einer Ausgestaltung des Energieversorgungssystems weist zumindest ein Generator und/oder ein Motor HTS-Technik auf.

In einer Ausgestaltung des Energieversorgungssystems ist eine Schnittstelle für eine Hafenstromversorgung vorgesehen. Diese Schnittstelle ist beispielweise eine Verbindung mit dem MV-Gleichspannungsbus und/oder eine Verbindung mit dem LV-Gleichspannungsbus und/oder eine Verbindung mit einem Drehstromsystem des Energieversorgungssystems.

Die Erfindung wird nachfolgend beispielhaft anhand von Figuren beschrieben. Dabei werden für gleichartige Einheiten die gleichen Bezugszeichen verwendet. Es zeigt:
- FIG 1: ein Schiff mit einer ersten Unterteilung in Zonen,
- FIG 2: ein Schiff mit einer zweiten Unterteilung in Zonen,
- FIG 3: ein Schiff mit einer dritten Unterteilung in Zonen,
- FIG 4: einen ersten Schaltplan für ein Energieversorgungssystem,
- FIG 5: einen zweiten Schaltplan für ein Energieversorgungssystem,
- FIG 6: einen dritten Schaltplan für ein Energieversorgungssystem,
- FIG 7: einen vierten Schaltplan für ein Energieversorgungssystem,
- FIG 8: einen fünften Schaltplan für ein Energieversorgungssystem,
- FIG 9: einen sechsten Schaltplan für ein Energieversorgungssystem,
- FIG 10: einen siebten Schaltplan für ein Energieversorgungssystem,
- FIG 11: Wicklungssysteme,
- FIG 12: eine Ersatzschaltung,
- FIG 13: einen achten Schaltplan für ein Energieversorgungssystem,
- FIG 14: einen neunten Schaltplan für ein Energieversorgungssystem,
- FIG 15A: Teil A eines zehnten Schaltplans für ein Energieversorgungssystem und
- FIG 15B: Teil B des zehnten Schaltplans für ein Energieversorgungssystem

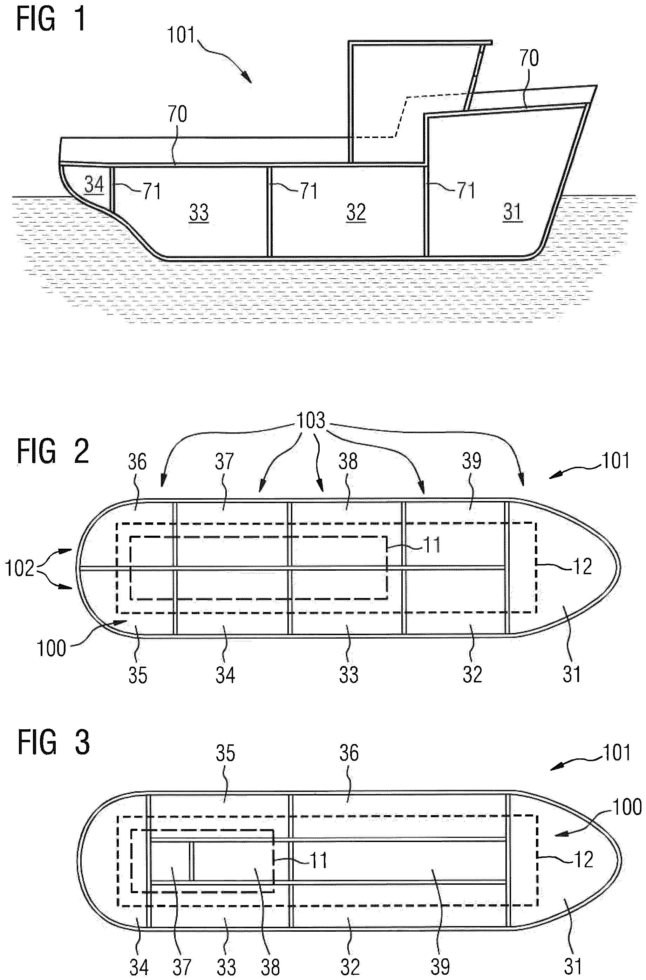

Die Darstellung nach FIG 1 zeigt ein Schiff 101 mit einer ersten Unterteilung in Zonen. Dargestellt ist eine erste Zone 31, eine zweite Zone 32, eine dritte Zone 33 und eine vierte Zone 34. Diese Zonen werden von Schotten 71 begrenzt. Eine weitere erfolgt beispielweise durch ein wasserdichtes Deck 70.

Die Darstellung nach FIG 2 zeigt ein Schiff 101 in einer Art Aufsicht, als auch Draufsicht, mit einer zweiten Unterteilung in Zonen 31 bis 39. Die Zonen können auch in Längszonen 102 und Querzone 103 unterteilt werden. Über die Zonen erstreckt sich ein Energieversorgungssystem 100. Das Energieversorgungssystem weist einen ersten Gleichspannungsbus 11 und einen zweiten Gleichspannungsbus 12 auf. Die Gleichspannungsbusse 11 und 12 erstrecken sich unterschiedlich über die Zonen. In einer weiteren Ausgestaltung kann auch die Schottung in den Längszonen entfallen. Dieses ist jedoch nicht dargestellt.

Die Darstellung nach FIG 3 zeigt ein Schiff 100 mit einer dritten Unterteilung in Zonen 31 bis 39, wobei die Zonen 37, 38 und 39 zentrale Zonen innerhalb des Schiffes sind und backbordseitig bzw. steuerbordseitig von weiteren Zonen begrenzt sind. Das Energieversorgungssystem 100 weist einen ersten Gleichspannungsbus 11 und einen zweiten Gleichspannungsbus 12 auf, wobei der erste Gleichspannungsbus 11 beispielsweise ein Mittelspannungsbus ist und der zweite Gleichspannungsbus 12 ein Niederspannungsbus ist.

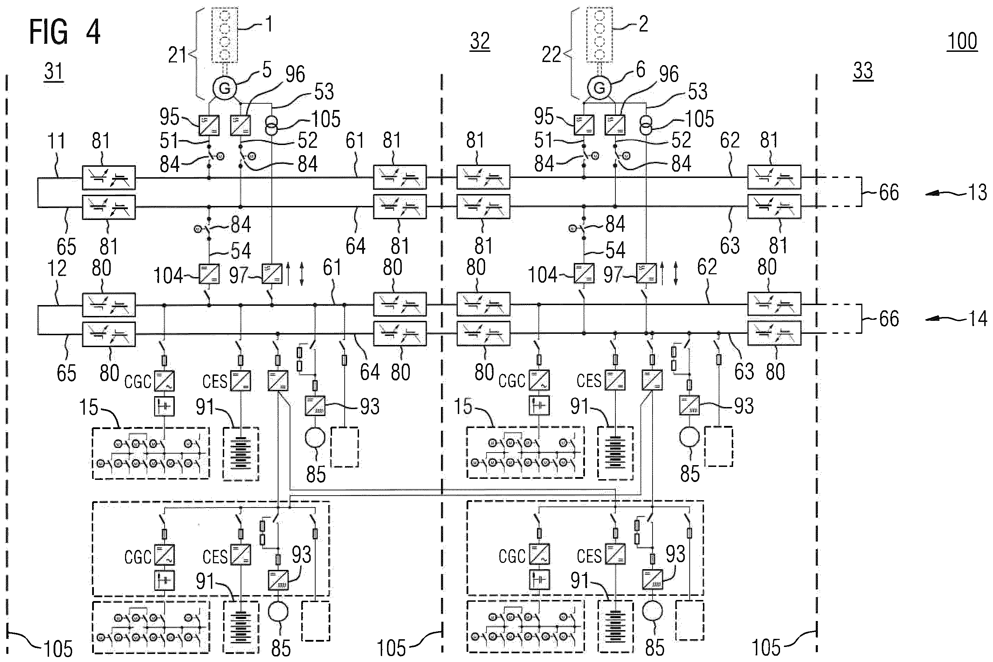

Die Darstellung nach FIG 4 zeigt einen ersten Schaltplan für ein Energieversorgungssystem 100. Die Darstellung weist eine erste Zone 31, eine zweite Zone 32 und eine dritte Zone 33 auf. Die Zonen sind durch Zonengrenzen 105 markiert. In der ersten Zone 31 befindet sich eine erste Energiequelle 21. Die erste Energiequelle 21 weist einen Diesel 1 und einen Generator 5 auf. In der zweiten Zone 32 befindet sich eine zweite Energiequelle 22. Die zweite Energiequelle 22 weist einen Diesel 2 und einen Generator 6 auf. Ein erster Gleichspannungsbus 11 erstreckt sich sowohl in die erste Zone 31 wie auch in die zweite Zone 32 und auch in die dritte Zone 33 und bildet dabei eine Ringbus aus. Ein zweiter Gleichspannungsbus 12 erstreckt sich sowohl in die erste Zone 31 wie auch in die zweite Zone 32 und auch in die dritte Zone 33 und bildet dabei auch einen Ringbus aus. Die Busse können auch nicht als Ringbusse ausgeführt sein, allerdings ist dieses jedoch nicht dargestellt. Der erste Gleichspannungsbus 11 befindet sich in einer ersten Gleichspannungsebene 13 bzw. stellt diese zur Verfügung. Der zweite Gleichspannungsbus 12 befindet sich in einer zweiten Gleichspannungsebene 14 bzw. stellt diese zur Verfügung. Der erste Gleichspannungsbus 11 ist in Abschnitte 61 bis 66 unterteilbar. Die Unterteilung gelingt mittels MV-Schalteinrichtungen 81. Der erste Gleichspannungsbus 11 ist also auf einer Mittelspannung. Der zweite Gleichspannungsbus 12 ist auch in Abschnitte 61 bis 66 unterteilbar. Die Unterteilung gelingt mittels LV-Schalteinrichtungen 80. Der zweite Gleichspannungsbus 12 ist also auf einer Niederspannung. Über den zweiten Gleichspannungsbus 12 ist ein Drehstrombus (AC-Bus) 15 speisbar. An dem zweiten Gleichspannungsbus 12 sind auch Batterien 91 angeschlossen. Als Verbraucher für den zweiten Gleichspannungsbus 12 sind Motoren (Asynchronmotoren, Synchronmotoren und/oder PEM Motoren) 85 gezeigt, welche über Wechselrichter 93 betreibbar sind. Zur Speisung der Gleichspannungsbusse 11 und 12 sind jeweils eine erste Speisung 51, eine zweite Speisung 52, eine dritte Speisung 53 und eine vierte Speisung 54 vorgesehen. Diese Speisungen sind speisende elektrische Verbindungen für die Gleichstrombusse. Der Generators 5 speist über die erste Speisung 51 den ersten Abschnitt 61, wobei die erste Speisung 51 einem Gleichrichter 95 und einen Schalter 84 aufweist. Der Generator 5 speist über die zweite Speisung 52 den vierten Abschnitt 64 des ersten Gleichspannungsbusses 11. Die zweite Speisung 52 in der ersten Zone 31 weist ebenso einen Gleichrichter 96 und einen Schalter 84 auf. Die dritte Speisung 53 weist einen Mittelspannungstransformator 105 und einen Gleichrichter 97 auf. Die dritte Speisung 53 speist den ersten Abschnitt 61 des zweiten Gleichspannungsbusses 12. die vierte Speisung 54 weist einen Schalter 84 und einen DC/DC-Steller 104 auf. Damit verbindet die vierte Speisung 54 ein Abschnitt 64 des ersten Gleichstrombusses 11 mit einem Abschnitt 61 des zweiten Gleichstrombusses 12. In der zweiten Zone 32 erfolgt der Anschluss des Generators 6 an die Gleichstrombusse 11 und 12 in gleicher Weise über die Speisungen 1 bis 4, wie in der ersten Zone 31 beschrieben.

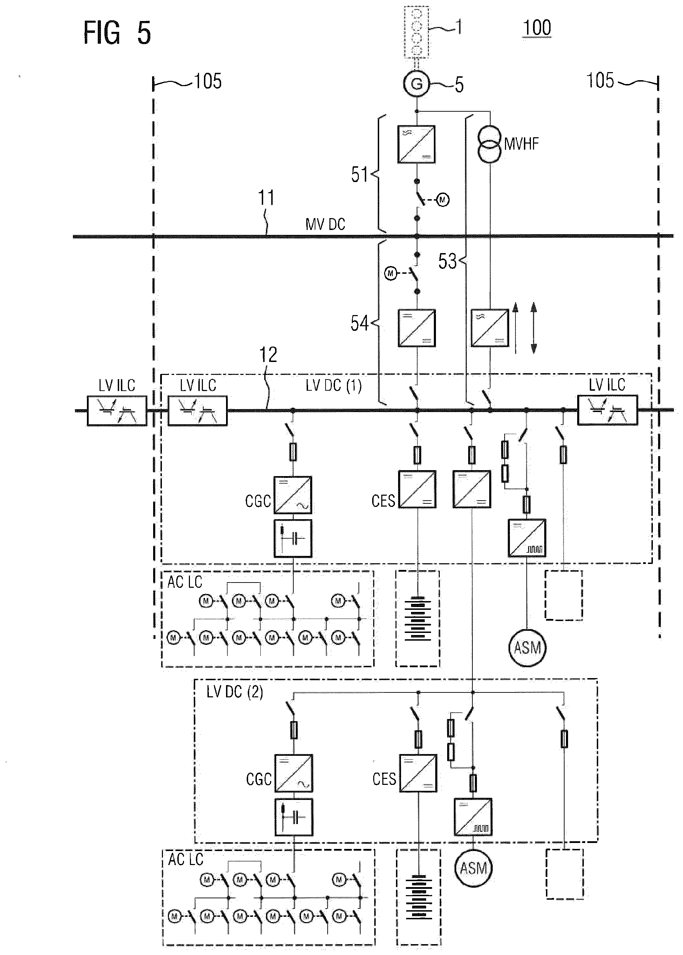

Die Darstellung nach FIG 5 zeigt einen zweiten Schaltplan für ein Energieversorgungssystem 100 Dabei ist im Vergleich zu FIG 4 ein vergrößerter Ausschnitt gezeigt. Im Gegensatz zu FIG 4 ist in FIG 5 zur Darstellung einer Variation ein Generator 5 gezeigt, welcher nur drei speisende elektrische Verbindungen 51, 53 und 54 zu den Gleichstrombusse 11 und 12 aufweist.

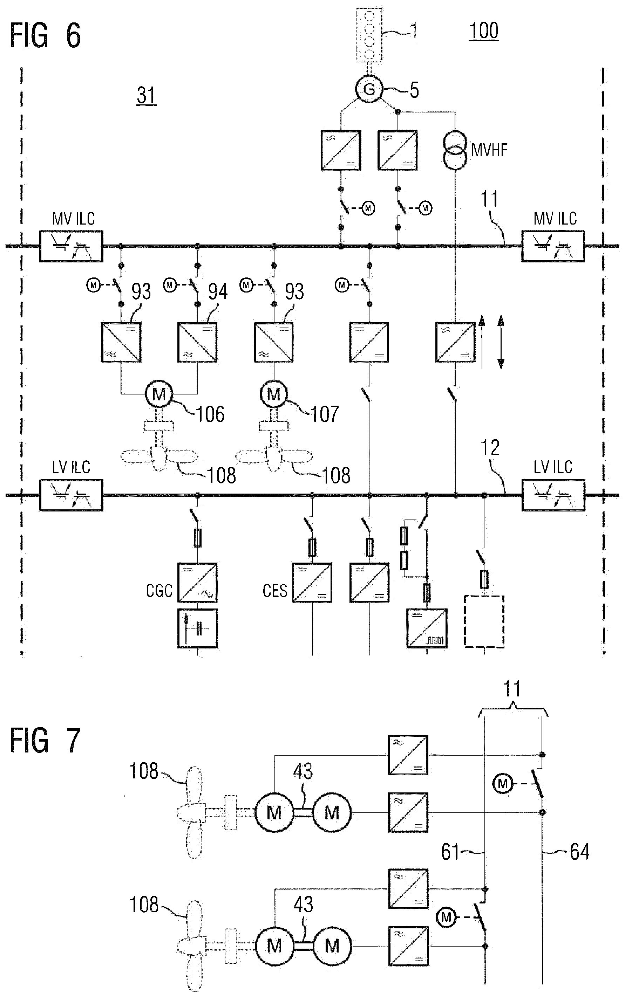

Die Darstellung nach FIG 6 zeigt einen dritten Schaltplan für ein Energieversorgungssystem 100. Dabei ist gezeigt, dass als Verbraucher an dem ersten Gleichspannungsbus 11 Schiffsantriebsmotoren 106, 107 angeschlossen sein können, welche jeweils zum Antrieb eines Propellers 108 vorgesehen sind. Der Motor 106 ist über die Wechselrichter 93 und 94 doppelt gespeist. Der Motor 107 ist einfach gespeist.

Dabei ist gezeigt, dass weitere Verbraucher an dem Gleichspannungsbus 11 Hilfsantriebe, z.B. Kompressor Antrieb 207, angeschlossen sein können.

Dabei ist gezeigt, dass ein Drehstromnetz über einen aktiven Wechselrichter, z.B. einem Modularen Multilevel Umrichter (MMC) mit/ohne Filter 208, der an dem Gleichspannungsbus 11 angeschlossen ist, erzeugt werden kann.

Dabei ist gezeigt, dass als Energieeinspeisung verschiedene Varianten vorgesehen sind.

Als eine Ausgestaltung ist ein Generator 201 mit einem zugeordneten Gleichrichter gezeigt.

Als eine Ausgestaltung ist ein Generator 200 mit mindestens zwei Wicklungssystemen und zwei zugeordneten Gleichrichtern für den Einsatz bei Leistungen, die für einen Gleichrichter nicht realisiert werden können.

Als eine Ausgestaltung können diese Gleichrichter auch parallel einen Generator mit einem Wicklungssystem (nicht gezeigt) speisen.

Als eine Ausgestaltung spießt der Generator 202 über einen Gleichrichter den ersten Gleichspannungsbus 11 und über einen Transformator 205 und einem Gleichrichter 206 den zweiten Gleichspannungsbus 12.

Als eine Ausgestaltung ist eine Einspeisung 204, als Verbindung zu Land, shore connection, gezeigt.

Als eine Ausgestaltung ist eine Verbindung des Gleichspannungsbusses 11 mit dem Gleichspannungsbus 12 mit einem DC/DC Umrichter 209 gezeigt.

Als eine Ausgestaltung ist dieser DC/DC Umrichter als Dreipolige 210, Three pole, gezeigt. Hierbei lassen sich neben des Gleichspanungsbusses 12 und 11 auch eine Batterie 211 und oder ein weiterer Gleichspannungsbus anschließen.

In einer weiteren Ausgestaltung kann dieser Three Pole auch als Mehrpol ausgeführt sein.

Die Darstellung nach FIG 7 zeigt einen vierten Schaltplan, wobei mit den Propellern 108 jeweils zwei Motoren über ein Wellensystem 43 zum Antrieb verbunden sind. Auch hier erfolgt die Speisung über den Gleichspannungsbus 11, aber über verschieden Abschnitten 61 und 64 dieses Busses.

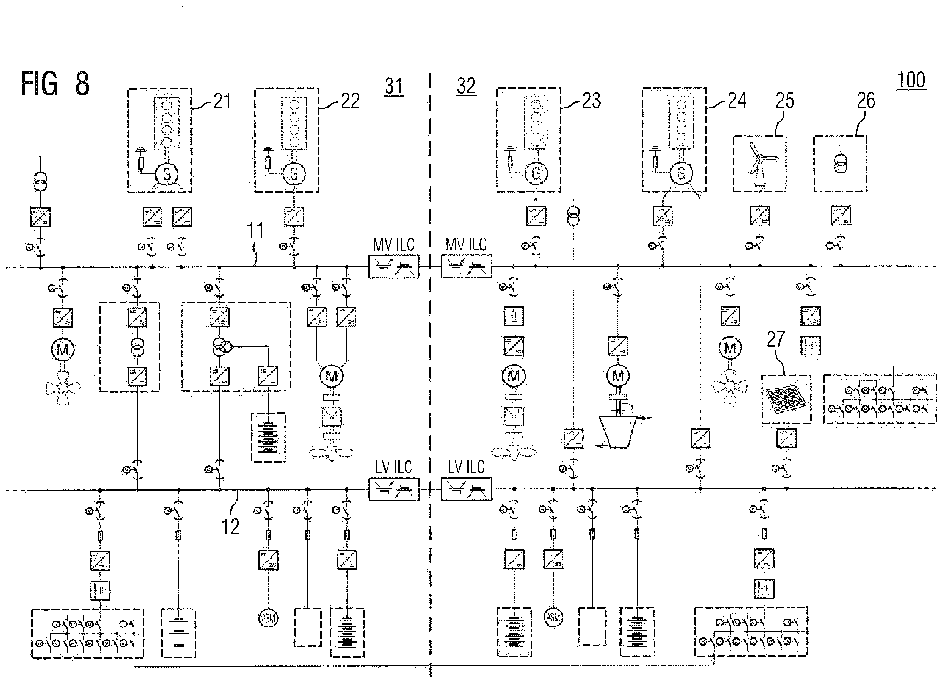

Die Darstellung nach FIG 8 zeigt einen fünften Schaltplan, wobei neben vier Energiequellen 21 bis 24 mit Diesel auch alternative Energiequellen gezeigt sind. Ein Windrad 25 kann eine Energiequelle sein. Ein Landanschluss 26 kann eine Energiequelle sein aber auch eine Photovoltaikanlage 27.

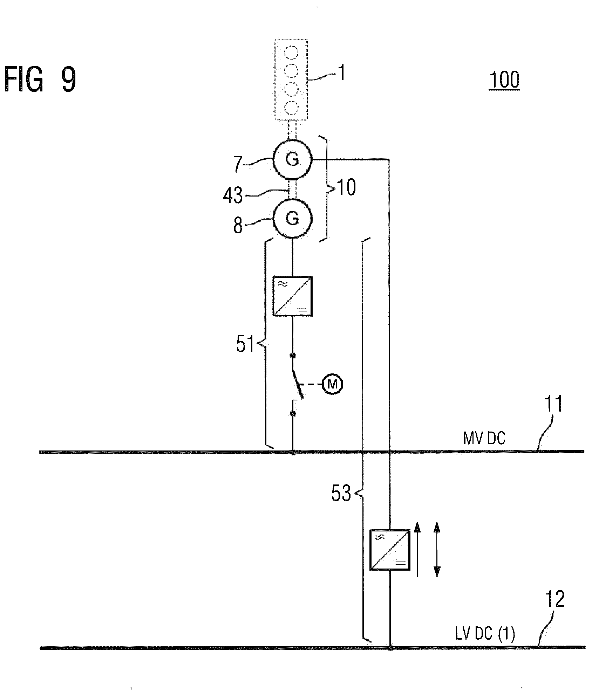

Die Darstellung nach FIG 9 zeigt ein Generatorsystem 10 mit zwei Generatoren 7 und 8, welche über ein Wellensystem 43 steif gekoppelt sind. Der Generator 7 weist hier ein Niederspannungswicklungssystem auf und der Generator 8 weist ein Mittelspannungswicklungssystem auf. Mittels des Generators 7 wird ein Niederspannungsgleichstrombus 12 gespeist und mittels des Generators 8 wird ein Mittelspannungsgleichstrombus 11 gespeist.

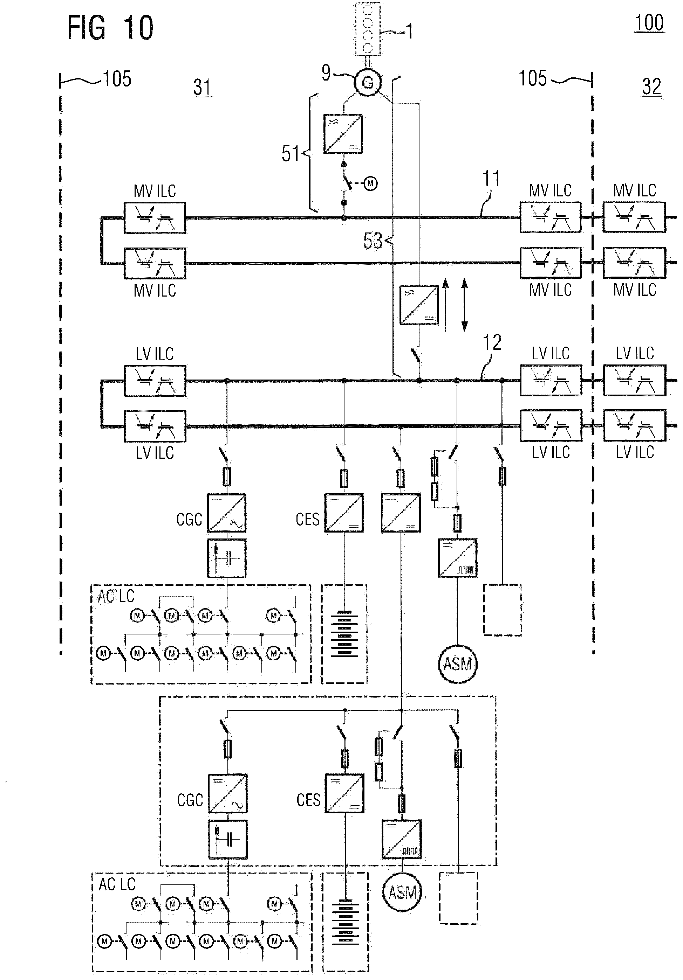

Die Darstellung nach FIG 10 zeigt einen Multiwicklungssystemgenerator 9 welcher zumindest zwei Wicklungssysteme aufweist, ein erstes Wicklungssystem für eine Mittelspannung und ein zweites Wicklungssystem für eine Niederspannung. Mittels des erste Wicklungssystems erfolgt über eine erste speisende elektrische Verbindung 51 die Speisung des ersten Gleichstrombusses 11 auf der Mittelspannungsebene (MV). Mittels des zweiten Wicklungssystems erfolgt über eine weitere speisende elektrische Verbindung 53 die Speisung des zweiten Gleichstrombusses 12 auf der Niederspannungsebene (LV).

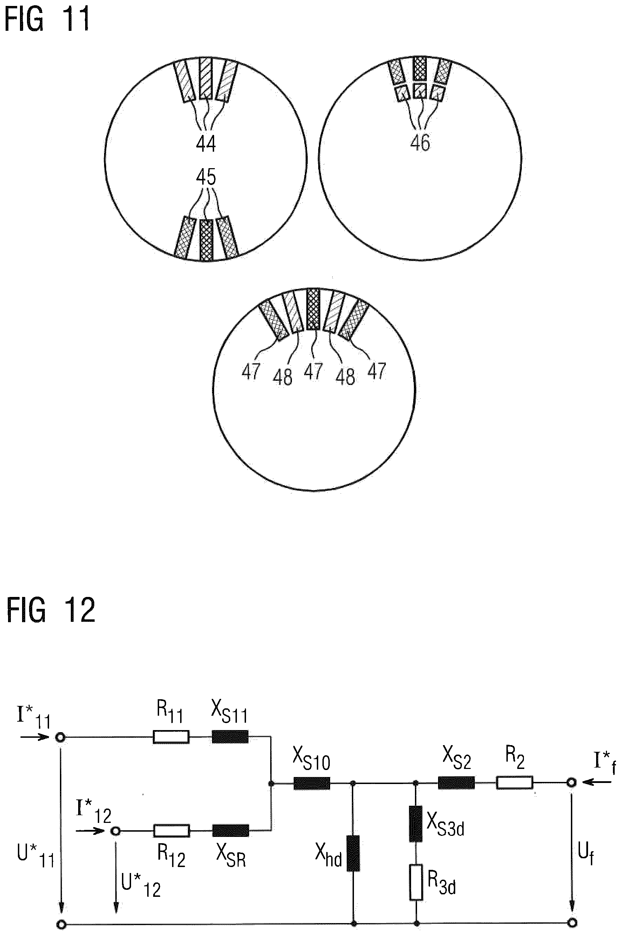

Die Darstellung nach FIG 11 zeigt schematisch die möglichen Anordnungen von Wicklungen im Stator eines Multiwicklungssystemgenerators. In einer ersten Variante können die LV-Wicklungen abschnittsweise in nebeneinander liegenden Nuten 44 sein und die MV-Wicklungen abschnittsweise in nebeneinander liegenden Nuten 45. In einer zweiten Variante können die MV-Wicklungen und die LV-Wicklungen in gemeinsamen Nuten 46 sein. In einer dritten Variante können die MV-Wicklungen und die LV-Wicklungen abwechselnd in Nuten 24 und 48 sein.

Die Darstellung nach FIG 12 zeigt ein Ersatzschaltbild für eine D-Achse eines Multiwicklungssystemgenerators.

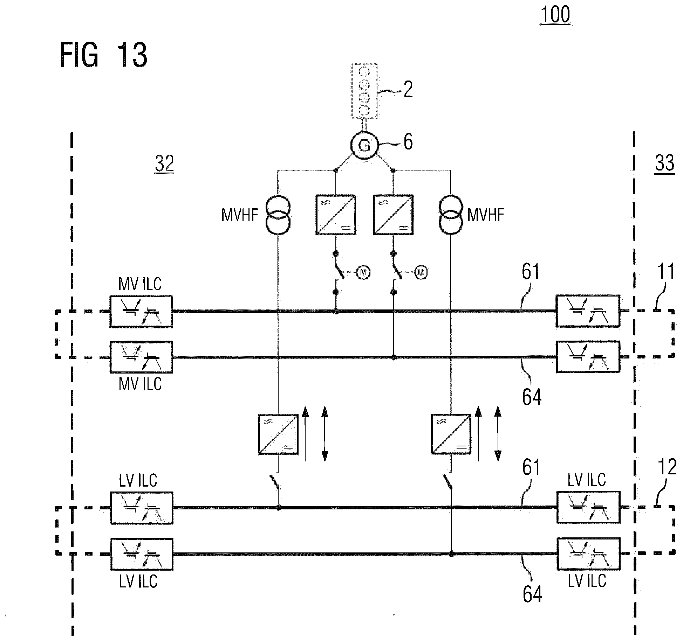

Die Darstellung nach FIG 13 zeigt einen achten Schaltplan für ein Energieversorgungssystem 100, wobei gezeigt ist wie von dem Generator 6 der erste Gleichspannungsbus 11 über zwei unterschiedliche Abschnitte 61 und 64 gespeist werden kann und wie von diesem Generator 6 auch der zweite Gleichspannungsbus 12 über auch dort zwei unterschiedliche Abschnitte gespeist werden kann.

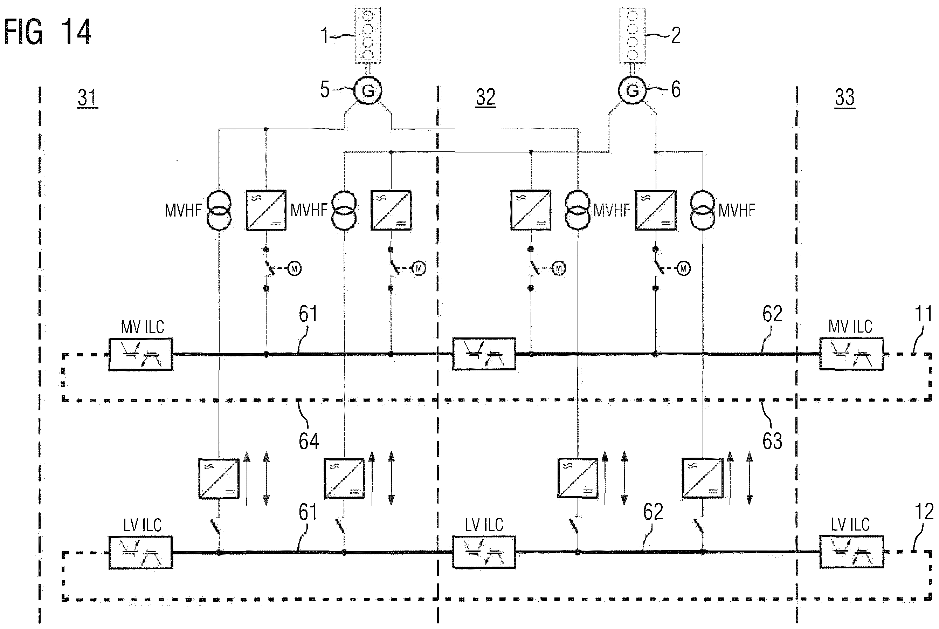

Die Darstellung nach FIG 14 zeigt, wie durch einen Generator in einer Zone (Generator 5 in Zone 31 und Generator 6 in Zone 32) jeweils zwei Abschnitte 61 und 62 des ersten Gleichspannungsbusses 11 in unterschiedlichen Zonen 31 und 32 speisbar sind und wie dies auch für den zweiten Gleichspannungsbus 12 zutrifft.

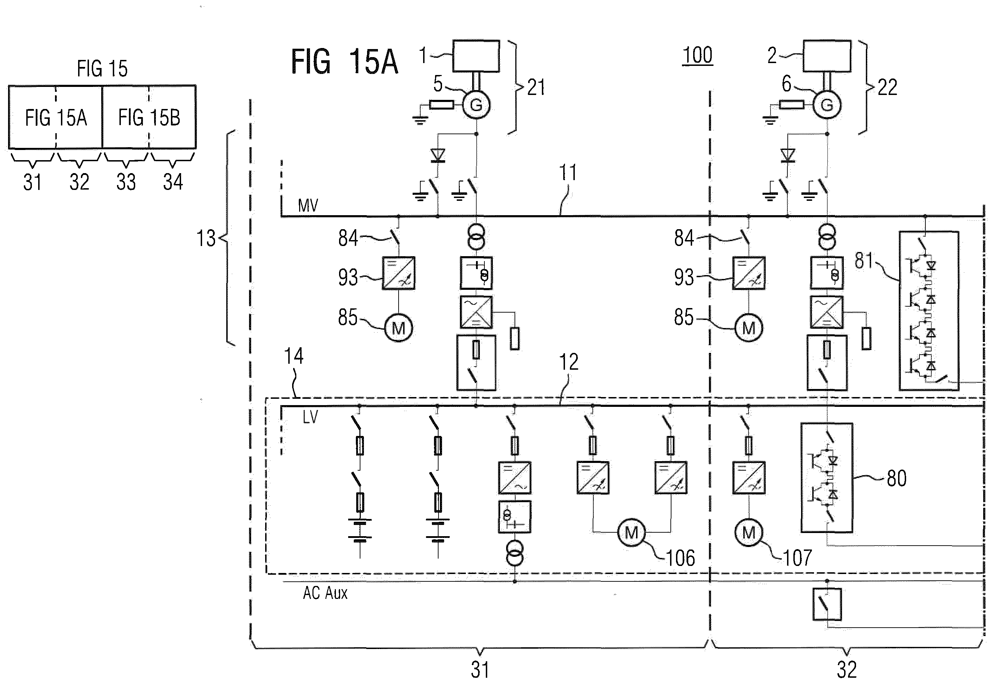

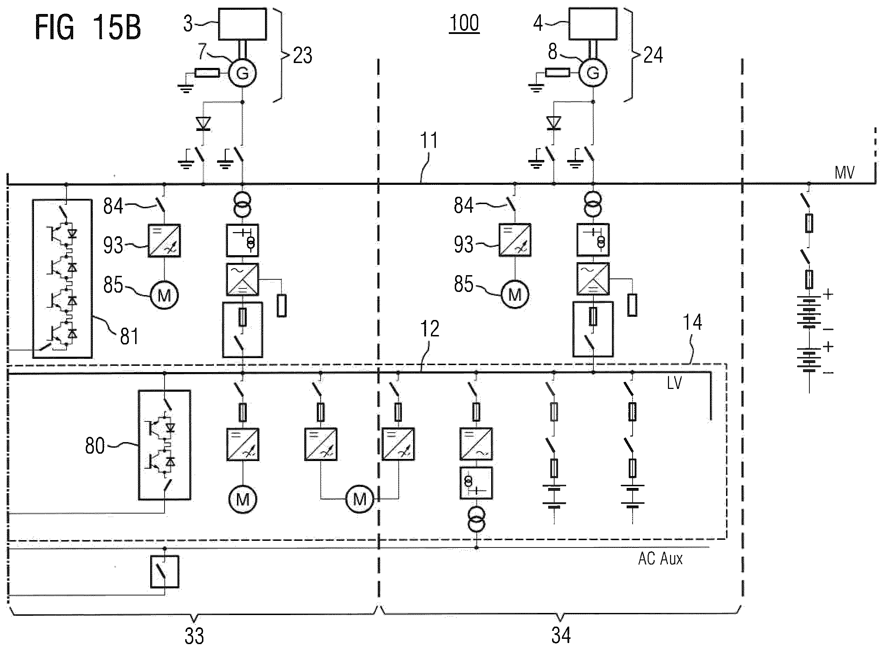

Die Darstellung nach FIG 15 ist in zwei Teilfiguren 15A und 15B aufgeteilt. Beide vereinen ein Energieversorgungssystem 100, welches vier Diesel 1, 2, 3 und 4 als Teil der Energiequellen 21, 22, 23 und 24 aufweist und zum Ausdruck bringt, dass das Energieversorgungssystem beinahe beliebig entsprechend der Anforderungen an die wassergebundene Einrichtung erweiterbar bzw. änderbar ist. Dadurch, dass sich die wassergebundene Einrichtung beispielsweise auf einem Schiff oder eine Bohrinsel befindet, ist diese ganz oder überwiegend als ein Inselnetz betrieben.

## Patentansprüche

1. Energieversorgungssystem (100) für eine wassergebundene Einrichtung (101),
mit einem ersten Gleichspannungsbus (11) für eine erste Gleichspannung und
mit einem zweiten Gleichspannungsbus (12) für eine zweite Gleichspannung,
mit einer ersten Energiequelle (21), wobei die erste Energiequelle (21) ein Generatorsystem aufweist, welches ein erstes Wicklungssystem (41) zur Speisung des ersten Gleichspannungsbusses (11) aufweist und welches ein zweites Wicklungssystem (42) zur Speisung des zweiten Gleichspannungsbusses (12) aufweist, mit einer zweiten Energiequelle (22), **dadurch gekennzeichnet, dass** die wassergebundene Einrichtung (101) eine erste Zone (31) und eine zweite Zone (32) aufweist, wobei die erste Energiequelle (21) in der ersten Zone (31) zur Speisung zumindest eines Gleichspannungsbusses (11,12) der zumindest zwei Gleichspannungsbusse (11,12) vorgesehen ist und wobei die zweite Energiequelle (22) in der zweiten Zone (32) zur Speisung zumindest eines Gleichspannungsbusses (11,12) der zumindest zwei Gleichspannungsbusse (11,12) vorgesehen ist, wobei insbesondere das Energieversorgungssystem (100) zumindest teilweise zonenabhängig gegliedert ist, wobei der erste Gleichspannungsbus (11) in Abschnitte (61 bis 66) unterteilbar ist und eine Unterteilung mittels MV-Schalteinrichtungen (81) gelingt, wobei der erste Gleichspannungsbus (11) auf einer Mittelspannung ist, und dass der zweite Gleichspannungsbus (12) auch in Abschnitte (61 bis 66) unterteilbar ist und eine Unterteilung mittels LV-Schalteinrichtungen (80) gelingt, wobei der zweite Gleichspannungsbus (12) auf einer Niederspannung ist.

2. Energieversorgungssystem (100) nach Anspruch 1, wobei das erste Wicklungssystem (41) für eine erste Spannung ausgelegt ist und das zweite Wicklungssystem (42) für eine zweite Spannung ausgelegt ist, wobei die erste Spannung größer ist als die zweite Spannung.

3. Energieversorgungssystem (100) nach Anspruch 1 oder 2, wobei das erste Wicklungssystem (41) elektrisch mit dem ersten Gleichspannungsbus (11) zu dessen trafolosen Speisung verbunden ist.

4. Energieversorgungssystem (100) nach einem der Ansprüche 1 bis 3, wobei das zweite Wicklungssystem (42) elektrisch mit dem zweiten Gleichspannungsbus (12) zu dessen trafolosen Speisung verbunden ist.

5. Energieversorgungssystem (100) nach einem der Ansprüche 1 bis 4, wobei das Generatorsystem einen ersten Generator (7) mit dem ersten Wicklungssystem und einen zweiten Generator (8) mit dem zweiten Wicklungssystem aufweist, wobei der erste Generator (7) und der zweite Generator (8) mittels eines gemeinsamen Wellensystems (43) antreibbar sind.

6. Energieversorgungssystem (100) nach einem der Ansprüche 1 bis 4, wobei das Generatorsystem ein Multiwicklungssystemgenerator (9) ist, wobei der Stator des Multiwicklungssystemgenerators (9) das erste Wicklungssystem und das zweite Wicklungssystem aufweist.

7. Energieversorgungssystem (100) nach Anspruch 6, wobei der Multiwicklungssystemgenerator (9) Nuten aufweist, welche das erste Wicklungssystem und das zweite Wicklungssystem betreffen.

8. Energieversorgungssystem (100) nach einem der Ansprüche 1 bis 7, wobei zumindest einer der Gleichspannungsbusse (11,12) als ein Ringbus ausbildbar ist.

9. Energieversorgungssystem (100) nach einem der Ansprüche 1 bis 8, wobei der erste Gleichspannungsbus (11) zur Speisung des zweiten Gleichspannungsbusses (12) vorgesehen ist.

10. Verfahren zum Betrieb eines Energieversorgungssystems (100) nach einem der vorhergehenden Ansprüche für eine wassergebundene Einrichtung (101), wobei mittels des ersten Wicklungssystems (41) eine erste Spannung erzeugt wird und mittels des zweiten Wicklungssystems (42) eine zweite Spannung erzeugt wird, wobei die zweite Spannung kleiner ist als die erste Spannung, wobei zum Antrieb des Generatorsystems ein Diesel oder eine Gasturbine verwendet wird, **dadurch gekennzeichnet, dass** eine MV-Schalteinrichtung (81) den ersten Gleichspannungsbus (11) oder eine LV-Schalteinrichtung (80) den zweiten Gleichspannungsbus (12) trennt.

11. Verfahren nach Anspruch 10, wobei die Speisung durch das erste Wicklungssystem (41) oder die Speisung durch das zweite Wicklungssystem (42) unterbunden wird.

## Claims

1. Power supply system (100) for a water-bound device (101), having a first DC voltage bus (11) for a first DC voltage and having a second DC voltage bus (12) for a second DC voltage, having a first power source (21), wherein the first power source (21) has a generator system which comprises a first winding system (41) for supplying the first DC voltage bus (11) and which comprises a second winding system (42) for supplying the second DC voltage bus (12), having a second power source (22), **characterized in that** the water-bound device (101) comprises a first zone (31) and a second zone (32), wherein the first power source (21) is provided in the first zone (31) for supplying at least one DC voltage bus (11, 12) of the at least two DC voltage buses (11, 12) and wherein the second power source (22) is provided in the second zone (32) for supplying at least one DC voltage bus (11, 12) of the at least two DC voltage buses (11, 12), wherein, in particular, the power supply system (100) is at least partially divided in a manner dependent on zone, wherein the first DC voltage bus (11) can be divided into sections (61 to 66) and division is performed by means of MV switching devices (81), wherein the first DC voltage bus (11) is at a medium voltage, and **in that** the second DC voltage bus (12) can also be divided into sections (61 to 66) and division is performed by means of LV switching devices (80), wherein the second DC voltage bus (12) is at a low voltage.

2. Power supply system (100) according to Claim 1, wherein the first winding system (41) is designed for a first voltage and the second winding system (42) is designed for a second voltage, wherein the first voltage is greater than the second voltage.

3. Power supply system (100) according to Claim 1 or 2, wherein the first winding system (41) is electrically connected to the first DC voltage bus (11) for the transformer-free supply thereof.

4. Power supply system (100) according to one of Claims 1 to 3, wherein the second winding system (42) is electrically connected to the second DC voltage bus (12) for the transformer-free supply thereof.

5. Power supply system (100) according to one of Claims 1 to 4, wherein the generator system comprises a first generator (7) having the first winding system and a second generator (8) having the second winding system, wherein the first generator (7) and the second generator (8) can be driven by means of a joint shaft system (43).

6. Power supply system (100) according to one of Claims 1 to 4, wherein the generator system is a multi-winding system generator (9), wherein the stator of the multi-winding system generator (9) comprises the first winding system and the second winding system.

7. Power supply system (100) according to Claim 6, wherein the multi-winding system generator (9) has slots which affect the first winding system and the second winding system.

8. Power supply system (100) according to one of Claims 1 to 7, wherein at least one of the DC voltage buses (11, 12) may be in the form of a ring bus.

9. Power supply system (100) according to one of Claims 1 to 8, wherein the first DC voltage bus (11) is provided for supplying the second DC voltage bus (12).

10. Method for operating a power supply system (100) according to one of the preceding claims for a water-bound device (101), wherein a first voltage is generated by means of the first winding system (41) and a second voltage is generated by means of the second winding system (42), wherein the second voltage is lower than the first voltage, wherein a diesel or a gas turbine is used to drive the generator system, **characterized in that** an MV switching device (81) disconnects the first DC voltage bus (11) or an LV switching device (80) disconnects the second DC voltage bus (12).

11. Method according to Claim 10, wherein the supply by the first winding system (41) or the supply by the second winding system (42) is prevented.

## Revendications

1. Système (100) d'alimentation en énergie électrique d'un dispositif (101) hydraulique,
comprenant un premier bus (11) à tension continue pour une première tension continue et
comprenant un deuxième bus (12) à tension continue pour une deuxième tension continue,
comprenant une première source (21) d'énergie électrique, dans lequel la première source (21) d'énergie électrique comporte un système de générateur, qui a un premier système (41) d'enroulement pour l'alimentation du premier bus (11) à tension continue et qui a un deuxième système (42) d'enroulement pour l'alimentation du deuxième bus (12) à tension continue, comprenant une deuxième source (22) d'énergie électrique, **caractérisé en ce que** le dispositif (101) hydraulique a une première zone (31) et une deuxième zone (32), dans lequel la première source (21) d'énergie électrique est prévue dans la première zone (31) pour l'alimentation d'au moins un bus (11, 12) à tension continue des au moins deux bus (11, 12) à tension continue et dans lequel la deuxième source (22) d'énergie électrique est prévue dans la deuxième zone (32) pour l'alimentation d'au moins un bus (11, 12) à tension continue des au moins deux bus (11, 12) à tension continue, dans lequel en particulier le système (100) d'alimentation en énergie électrique est subdivisé au moins en parties en fonction des zones, dans lequel le premier bus (11) à tension continue peut être subdivisé en des tronçons (61 à 66) et une subdivision est obtenue au moyen de dispositifs (81) de coupure MV, dans lequel le premier bus (11) à tension continue est à une tension moyenne, et **en ce que** le deuxième bus (12) à tension continue peut être subdivisé aussi en tronçons (61 à 66) et on obtient une subdivision au moyen de dispositifs (80) de coupure LV, le deuxième bus (12) à tension continue étant à une tension basse.

2. Système (100) d'alimentation en énergie électrique suivant la revendication 1, dans lequel le premier système (41) d'enroulement est conçu pour une première tension et le deuxième système (42) d'enroulement est conçu pour une deuxième tension, dans lequel la première tension étant plus haute que la deuxième tension.

3. Système (100) d'alimentation en énergie électrique suivant la revendication 1 ou 2, dans lequel le premier système (41) d'enroulement est connecté électriquement au premier bus (11) à tension continue pour son alimentation sans transformateur.

4. Système (100) d'alimentation en énergie électrique suivant l'une des revendications 1 à 3, dans lequel le deuxième système (42) d'enroulement est connecté électriquement au deuxième bus (12) à tension continue pour son alimentation sans transformateur.

5. Système (100) d'alimentation en énergie électrique suivant l'une des revendications 1 à 4, dans lequel le système de générateur a un premier générateur (7) ayant le premier système d'enroulement et un deuxième générateur (8) ayant le deuxième système d'enroulement, dans lequel le premier générateur (7) et le deuxième générateur (8) peuvent être entraînés au moyen d'un système (43) d'arbre commun.

6. Système (100) d'alimentation en énergie électrique suivant l'une des revendications 1 à 4, dans lequel le système de générateur est un générateur (9) à système à plusieurs enroulements, dans lequel le stator du générateur (9) du système à plusieurs enroulements a le premier système d'enroulement et le deuxième système d'enroulement.

7. Système (100) d'alimentation en énergie électrique suivant la revendication 6, dans lequel le générateur (9) à système à plusieurs enroulements a des encoches, qui concernent le premier système d'enroulement et le deuxième système d'enroulement.

8. Système (100) d'alimentation en énergie électrique suivant l'une des revendications 1 à 7, dans lequel au moins l'un des bus (11, 12) à tension continue peut être constitué sous la forme d'un bus annulaire.

9. Système (100) d'alimentation en énergie électrique suivant l'une des revendications 1 à 8, dans lequel le premier bus (11) à tension continue est prévu pour l'alimentation du deuxième bus (12) à tension continue.

10. Procédé pour faire fonctionner un système (100) d'alimentation en énergie électrique suivant l'une des revendications précédentes d'un dispositif (101) hydraulique, dans lequel, au moyen du premier système (41) d'enroulement, on produit une première tension et, au moyen du deuxième système (42) d'enroulement, on produit une deuxième tension, la deuxième tension étant plus basse que la première tension, dans lequel, pour l'entraînement du système de générateur, on utilise un diesel ou une turbine à gaz, **caractérisé en ce qu'**un dispositif (81) de coupure MV sépare le premier bus (11) à tension continue ou un dispositif (80) de coupure LV sépare le deuxième bus (12) à tension continue.

11. Procédé suivant la revendication 10, dans lequel on arrête l'alimentation par le premier système (41) d'enroulement ou l'alimentation par le deuxième système (42) d'enroulement.
